(19) Europäisches Patentamt / European Patent Office / Office européen des brevets

(11) **EP 3 764 124 A1**

(12) **EUROPEAN PATENT APPLICATION**

(43) Date of publication:
**13.01.2021 Bulletin 2021/02**

(51) Int Cl.:
**G01S 17/42** (2006.01)          **G01S 17/86** (2020.01)
**G01S 17/931** (2020.01)        **G06N 3/02** (2006.01)

(21) Application number: **20179425.2**

(22) Date of filing: **11.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.07.2019 JP 2019127163**

(71) Applicant: **Ricoh Company, Ltd.**
**Tokyo 143-8555 (JP)**

(72) Inventors:
• **MOTOHASHI, Naoki**
**Ohta-ku, Tokyo 143-8555 (JP)**

• **SAISHO, Kenichiroh**
**Ohta-ku, Tokyo 143-8555 (JP)**
• **MATSUURA, Kazuma**
**Ohta-ku, Tokyo 143-8555 (JP)**
• **SEKIGUCHI, Hiroyoshi**
**Ohta-ku, Tokyo 143-8555 (JP)**
• **KOBAYASHI, Daishiro**
**Ohta-ku, Tokyo 143-8555 (JP)**
• **YAMADA, Yuu**
**Ohta-ku, Tokyo 143-8555 (JP)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(54) **DISTANCE MEASURING APPARATUS, METHOD FOR MEASURING DISTANCE, ON-VEHICLE APPARATUS, AND MOBILE OBJECT**

(57)     A distance measuring apparatus (100) includes a signal conversion unit (22) to match a format of a second signal relating to a distance to an object with a format of a first signal relating to an image; and a distance information output unit (24) to output distance information based on the first signal and the second signal having the format matched with the format of the first signal. The signal conversion unit (22) converts the second signal such that, among length information in directions of a plurality of dimensions held in the first signal and length information in directions of a plurality of dimensions held in the second signal, length information in a direction of at least one of the plurality of dimensions of the first signal represents length information in a direction of at least one of the plurality of dimensions of the second signal.

FIG. 1

EP 3 764 124 A1

**Description**

BACKGROUND

Technical Field

The present disclosure relates to a distance measuring apparatus, a method for measuring a distance, an on-vehicle apparatus, and a mobile object.

Description of the Related Art

As an algorithm for calculating a disparity for stereo cameras, block matching in which feature points are used is known in the art. In the block matching, a feature point is searched for while a right or left image is shifted, and the amount of shift is regarded as a disparity. Then, a cost is calculated on a disparity-by-disparity basis, and a disparity that minimizes the cost in the searching disparity space is detected. Finally, in the block matching, the distance corresponding to each pixel is calculated according to an equation "$Z = BF/d$" indicating the relation between a disparity value $d$ and a distance $Z$, where B denotes a base-line length and F denotes a focal length. The semi-global matching (SGM) propagation method where a disparity value is precisely derived even from an object with a little texture is also known in the art.

However, it is difficult to secure the distance resolution at a remote site in regard to the distance that is calculated from a disparity using such an algorithm as above for calculating a disparity, and the variations in value of distance measurement (or the distribution of the values of distance measurement) tend to increase.

For example, in the industry of on-vehicle apparatuses as typified by automatic driving industry, improvement in performance of distance measurement at a remote point is sought after. In order to achieve such improvement, correction of the distance that is calculated using an algorithm as above for calculating a disparity, using the distance information obtained by using light detection and ranging (LiDAR) or laser imaging detection and ranging (LiDAR) where the spatial resolution is low but the distance resolution is high, is under study. In the LiDAR, the distance to an object is calculated based on the length of time it takes from a point in time when a laser beam is emitted to an object until a point in time when a reflected signal returns from the object. For example, methods in which a peak of the reflected signals is detected are known in the art as a method of specifying a reflected signal from an object based on the reflected signals that are obtained in chronological order.

Conventionally, an attempt to combine the measurement result obtained by a LiDAR device where the spatial resolution is low but the distance resolution is high with the measurement result of a stereo camera where the spatial resolution is high but the distance resolution is low at a remote point is known in the art (see, for example, JP-2015-143679-A). Such a combination may be referred to as a fusion. JP-2015-143679-A discloses a disparity computation system that generates a disparity image. In such a disparity computation system, the distance information obtained by using the LiDAR device is associated with each one of the pixels of a captured image, and a value based on the distance information associated with each one of the pixels of the captured image is used to compute the disparity of each one of the pixels of the captured image. Due to such a fusion as above, for example, output of a three-dimensional high-resolution distance-measurement result, a narrow distribution of values of distance measurement, highly-precise detection of a surface of discontinuity, downsizing, and an improvement in environmental robustness may be achieved.

There are, however, limits for a human to conceive a logic of how signals in different formats are combined, such as the measurement result of the LiDAR device and the measurement result of the camera. For example, to obtain robustness for a wide variety of scenes where distances are measured (brightness of the surrounding environment, climate, and so forth), a logic suitable for all scenes (or a majority of scenes) is required. However, it is difficult to set such a logic that suits for a wide variety of scenes. Thus, such an inconvenience that desirable performance for distance measurement is obtained in a certain scene whereas desirable performance for distance measurement is not obtained in another scene may occur.

SUMMARY

In light of the situations, an object of the present disclosure is to provide a distance measuring apparatus capable of combining two or more signals in different formats without a human setting a logic for combination.

A distance measuring apparatus according to an embodiment of the present disclosure is configured to measure a distance to an object based on a plurality of signals in different formats. The distance measuring apparatus includes a signal conversion unit configured to match a format of a second signal relating to a distance to an object with a format of a first signal relating to an image; and a distance information output unit configured to output distance information based on the first signal and the second signal having the format matched with the format of the first signal by the signal conversion unit. The signal conversion unit converts the second signal such that, among length information in directions of a plurality of dimensions held in the first signal and length information in directions of a plurality of dimensions held in the second signal having the format matched with the format of the first signal, length information in a direction of at least one of the plurality of dimensions of the first signal represents length information in a direction of at least one of the plurality of dimensions of the second signal.

A distance measuring apparatus capable of combining two or more signals in different formats without a human setting a logic for combination can be provided.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a schematic view illustrating a combination of a signal of a camera and a signal of a LiDAR device using machine learning;
FIG. 2 illustrates an example of an external arrangement and an installation example of a distance measuring apparatus;
FIG. 3 illustrates an example of a general arrangement of the distance measuring apparatus;
FIG. 4 illustrates an example of a hardware configuration of the distance measuring apparatus;
FIG. 5 illustrates the principal of deriving a disparity value with respect to an object from a comparison image and a reference image by triangulation, and measuring the distance from the distance measuring apparatus to the object using the disparity value;
FIG. 6 schematically illustrates the intensity in chronological order when an emitted laser beam is reflected by an object and received;
FIG. 7 is an example of a functional block diagram when functions of a stereo image computation unit are divided into blocks;
FIG. 8 is a schematic perspective view of an example of an information processing apparatus;
FIG. 9 illustrates an example of a hardware configuration of the information processing apparatus;
FIG. 10 is an example of a functional block diagram when functions of the information processing apparatus are divided into blocks;
FIGs. 11A, 11B, 11C, and 11D each illustrates a relationship between image data and a reflected signal;
FIG. 12 is a diagram of a general arrangement of an example of a distance measuring apparatus;
FIG. 13 illustrates a neural network in which a number L of layers from an input layer to an output layer are fully connected to one another;
FIG. 14 is an example of a flowchart describing a process during learning of a neural network;
FIG. 15 is an example of a flowchart describing a procedure of the information processing apparatus to generate a distance information output unit;
FIG. 16 is an example of a flowchart describing a procedure of the distance measuring apparatus to generate a distance image;
FIG. 17 illustrates an example of a configuration of a convolutional neural network (CNN);
FIGs. 18A and 18B each illustrate the relationship between a filter and a computation result;
FIG. 19 illustrates a convolution layer in which an activation function is applied to convolutional computation;
FIGs. 20A and 20B are examples of functional block diagrams when functions of the distance measuring apparatus and the information processing apparatus are divided into blocks;
FIGs. 21A and 21B illustrate dimensional extension;
FIGs. 22A and 22B are each an example of a diagram of a general arrangement of the distance measuring apparatus or the information processing apparatus that outputs a distance image from a feature image block and an intensity data block;
FIG. 23 is an example of a flowchart describing a procedure of the information processing apparatus to generate a distance information output unit;
FIG. 24 is an example of a flowchart describing a procedure of the distance measuring apparatus to generate a distance image;
FIG. 25 is an example of a functional block diagram when functions of the information processing apparatus are divided into blocks;
FIG. 26 schematically illustrates an example of a method of designing a loss function;
FIG. 27 is a diagram of a general arrangement of an example of the information processing apparatus that outputs a distance image from a feature image block and an intensity data block;

FIG. 28 is a diagram of a general arrangement of an example of the distance measuring apparatus that outputs a distance image from a feature image block and an intensity data block;

FIG. 29 is an example of a flowchart describing a procedure of the information processing apparatus to generate a distance information output unit;

FIG. 30 is an example of a flowchart describing a procedure of the distance measuring apparatus to generate a distance image;

FIG. 31 illustrates an example of a configuration of a distance measuring apparatus that measures a distance by a combination of a stereo camera and a LiDAR range finder;

FIG. 32 illustrates an example of a configuration of a distance measuring apparatus that measures a distance by a combination of a camera and a radar;

FIG. 33 illustrates an example of a configuration of a distance measuring apparatus that measures a distance by a combination of a stereo camera and a radar;

FIG. 34 illustrates an example of a configuration of a distance measuring apparatus that measures a distance by a combination of a camera and a sonar;

FIG. 35 illustrates an example of a configuration of a distance measuring apparatus that measures a distance by a combination of a stereo camera and a sonar; and

FIG. 36 illustrates an example of a configuration of a vehicle in which the distance measuring apparatus is installed.

The accompanying drawings are intended to depict embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

A distance measuring apparatus and a method for measuring a distance performed by the distance measuring apparatus are described below as examples of embodiments to implement the present disclosure.

In the embodiment, respective signals obtained by a plurality of distance measurable sensors (a camera and a LiDAR device) are combined using machine learning.

The advantages of the use of machine learning are described first. Machine learning includes various approaches. An approach of preparing training data that is an answer output in response to an input, and extracting the feature value that expresses the relationship between the input and the answer output is called supervised learning. Since the supervised learning prepares training data for an input in advance, extracting a feature that derives an output from an input can associate the input with the output so that output data with higher precision is output, compared with a situation where an engineer designs a feature value that is supposed to be proper from input data. A method of machine learning that extracts feature values from multiple layers is deep learning. The deep learning layers and combines the feature values extracted from the respective layers to extract a more complicated feature value. Thus, regarding a logic of how signals in different formats are combined, a feature value that exceeds a previously set logic figured out by a human can be extracted and robustness can be obtained for a variety of scenes.

Moreover, the present embodiment uses a raw signal of a LiDAR device. Many studies of deep learning aimed at distance measurement in the art frequently use a distance image (depth image) as an input of the LiDAR device. The distance image has embedded therein a value of distance obtained when the LiDAR device receives light. In this case, however, a weak signal that is reflected and returned from an object at a long distance is removed by a mechanism such as a comparator in the LiDAR device and is not acquired as a signal (the signal not acquired is not included as the distance in the pixel value). In contrast, according to the present embodiment, a raw signal of the LiDAR device is used as an input of the LiDAR device. The raw signal is a signal obtained by sampling all intensities that change with time. Actually, it is difficult to sample all signals. The distance measuring apparatus acquires the intensity at a short constant time interval at which a signal waveform can be reproduced.

The raw signal includes noises, but includes correct weak signals. Distance measurement for a long distance is available if many correct weak signals can be collected and a network capable of extracting true values from noises can be constructed through deep learning.

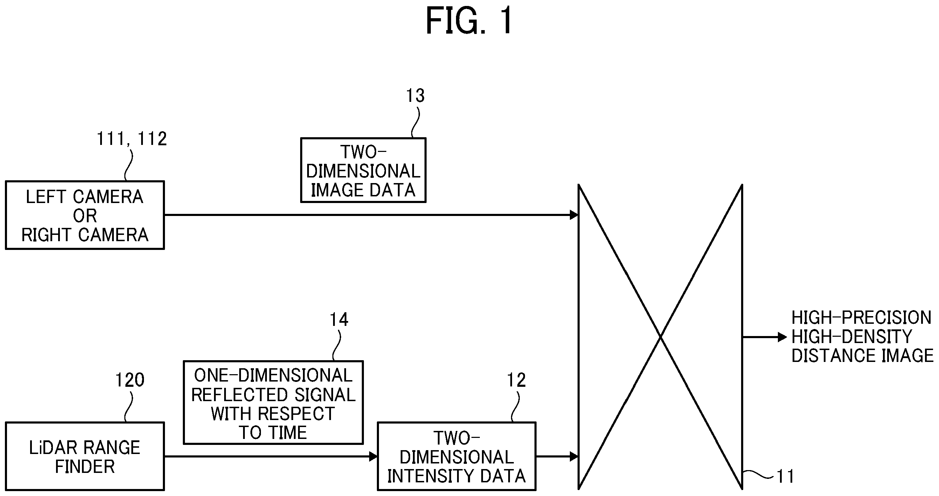

FIG. 1 is a schematic view illustrating a combination of a signal of a camera and a signal of a LiDAR device using machine learning. A signal output from a left camera 111 or a right camera 112 is two-dimensional image data 13 (an example of a first signal). A signal output from a LiDAR range finder 120 including the LiDAR device is a one-dimensional reflected signal 14 (an example of a second signal) with respect to time. When signals are formed in different manners, it may take a time to converge learning, which will be described later. So, the distance measuring apparatus converts the one-dimensional reflected signal 14 into two-dimensional intensity data 12. Thus, the numbers of dimensions of the signals in different formats match each other.

When the numbers of dimensions have met each other, a neural network 11 learns correspondence between input data and training data, for example, using a method of machine learning such as deep learning. Layering allows extraction of a feature value that exceeds a previously set logic figured out by a human. That is, even when signals in different formats are input, the neural network 11 can output data close to the answer distance image. Thus, even when the format of the signal of the left camera 111 or the right camera 112 differs from the format of the signal of the LiDAR range finder 120, highly robust distance measurement is available for a variety of scenes without a human figuring out a logic of how signals in different formats are combined.

Machine learning is a technology for allowing a computer to obtain learning ability like a human. The technology autonomously generates an algorithm required for a computer to make determination such as identification of data from learning data acquired in advance, applies the algorithm to new data, and performs prediction. The learning method for machine learning may be one of learning methods of supervised learning, unsupervised learning, semi-supervised learning, reinforcement learning, and deep learning; or a combination of at least two of the above-listed learning methods. The learning method for machine learning is not limited.

The format of signals represents the structure, model, frame, and so forth of signals, other than numerals. For example, the format of signals includes the number of signals and the number of dimension of signals.

The dimension represents a typical degree of expansion of a space.

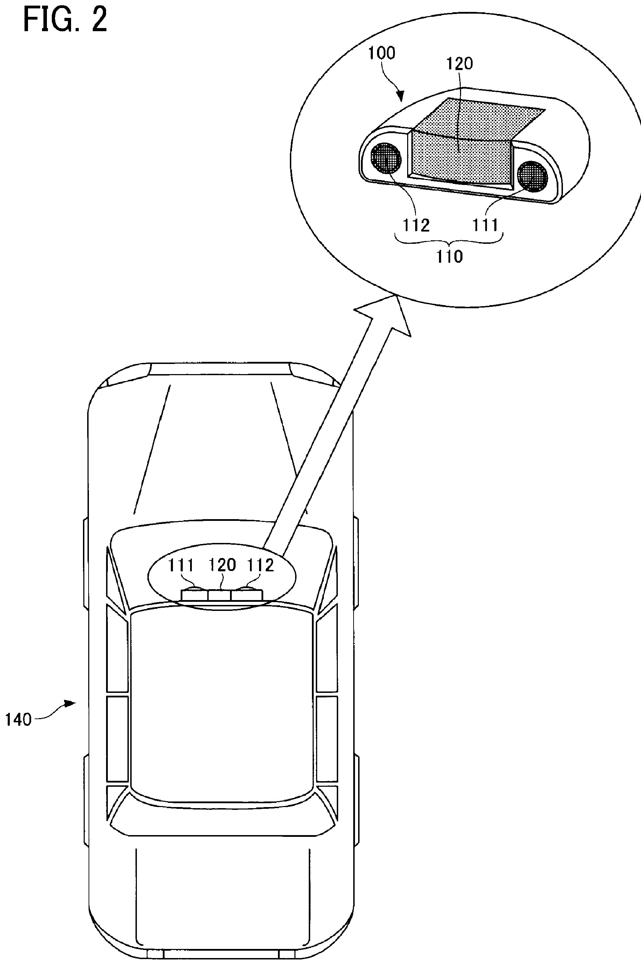

Referring to FIG. 2, an external arrangement and an installation example of the distance measuring apparatus 100 are described. FIG. 2 exemplarily illustrates the external arrangement and the installation example of the distance measuring apparatus 100. FIG. 2 illustrates a case where the distance measuring apparatus 100 includes a stereo camera. This is because distance measurement using the stereo camera may be performed separately. This is also because an image of the stereo camera can serve as an input of the camera. Alternatively, the present embodiment may use one camera.

The distance measuring apparatus 100 includes a stereo camera 110 and a LiDAR range finder 120. The stereo camera 110 includes a right camera (first imaging device) 112 and a left camera (second imaging device) 111. The LiDAR range finder 120 is disposed between the right camera 112 and the left camera 111. When the measurement results of the LiDAR range finder 120 and the stereo camera 110 are combined (fused), three-dimensional information on a surrounding environment can be highly precisely acquired.

The right camera 112 and the left camera 111 are brought into synchronization with each other in a predetermined frame cycle, capture respective images, and generate captured images.

The LiDAR range finder 120 emits a laser beam and receives the reflected light to measure the distance to an irradiation position (an object existing in an irradiation direction) by a time of flight (TOF) technique. The LiDAR range finder 120 measures the distance using so-called LiDAR.

The distance measuring apparatus 100 is installed on a center portion of the inner side of the front window of a vehicle 140, at a position near the ceiling. In this case, the stereo camera 110 and the LiDAR range finder 120 are installed to be directed in a forward direction of the vehicle 140. That is, in the vehicle 140, the distance measuring apparatus 100 is installed so that the optical axis of the stereo camera 110 and the center of the irradiation direction of the laser beam of the LiDAR range finder 120 extend in the same direction.

The installation position in FIG. 2 is merely an example. The distance measuring apparatus 100 may be installed on the dashboard or roof, or in the bumper of the vehicle. The installation position in FIG. 2 concerns acquisition of three-dimensional information in front of the vehicle. The distance measuring apparatus 100 may be installed to acquire three-dimensional information in the right, left, or rear of the vehicle.

The distance measuring apparatus 100 is housed in a housing as illustrated in FIG. 2. Alternatively, some devices may be separately provided and may communicate with each other to implement a distance measuring system.

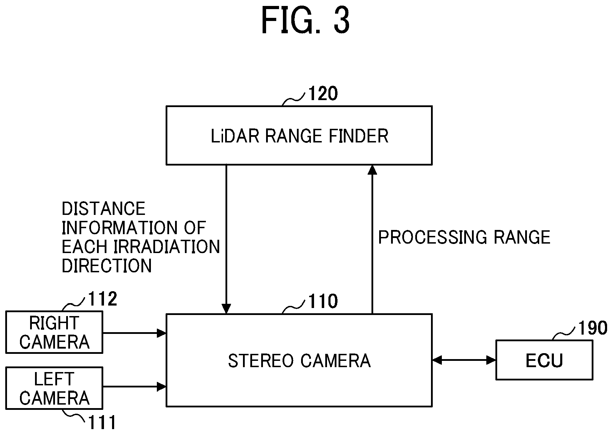

An example of a general arrangement of the distance measuring apparatus 100 is described next referring to FIG. 3. FIG. 3 illustrates the example of the general arrangement of the distance measuring apparatus 100.

The distance measuring apparatus 100 is configured such that the LiDAR range finder 120 and the stereo camera 110 can exchange data with each other as desired. As described above, the distance measuring apparatus 100 is provided with the stereo camera 110 that processes a reference image and a comparison image to output a distance image, in addition to the right camera 112 and the left camera 111.

The LiDAR range finder 120 may output the raw signal of each irradiation direction to the stereo camera 110. The stereo camera 110 combines the raw signal of each irradiation direction and the image of the camera to generate a specific distance image, and outputs the distance image to an electronic control unit (ECU) 190. As a fusion between the LiDAR range finder 120 and the stereo camera 110 is performed as described above, three-dimensional information with a high degree of precision can be obtained.

In FIG. 3, for example, the distance image and the reference image are sent to the ECU 190. The ECU 190 is an electronic control unit of the vehicle. The distance measuring apparatus 100 that is mounted in a vehicle may be referred to as an on-vehicle apparatus in the following description. The ECU 190 performs various kinds of driver assistance using the distance images and reference images output from the distance measuring apparatus 100. Various kinds of pattern matching is performed on a reference image to recognize, for example, a preceding vehicle, a pedestrian, a white line, and the condition of a traffic signal.

Driver assistance varies depending on a vehicle. For example, when a lateral position of an object overlaps the width of the user's vehicle, an alert or braking is given in accordance with a time to collision (TTC) that is calculated from the distance and relative speed. When it is difficult to stop the vehicle before a collision occurs, the steering is controlled in a direction to avoid a collision.

Moreover, the ECU 190 performs adaptive cruise control (ACC) to follow the preceding vehicle with a following distance that varies depending on the vehicle speed. When the preceding vehicle stops, the user's vehicle also stops. When the preceding vehicle starts traveling, the user's vehicle starts traveling. For example, when the ECU 190 is capable of recognizing a white line, lane keeping assist may be performed to control the steering such that the user's vehicle travels forward in the center of the traffic lane, and deviation prevent assist may be performed to change the travel direction of the user's vehicle toward the travel lane in a case where the user's vehicle possibly deviates from the travel lane.

When an obstacle exists in the forward direction while the vehicle stops, the vehicle can be prevented from rapidly starting. For example, when an obstacle exists in the forward direction that is determined in accordance with the operated position of the shift lever, and when the operation amount of the accelerator pedal is large, the engine output is limited or an alert is made to reduce the damage.

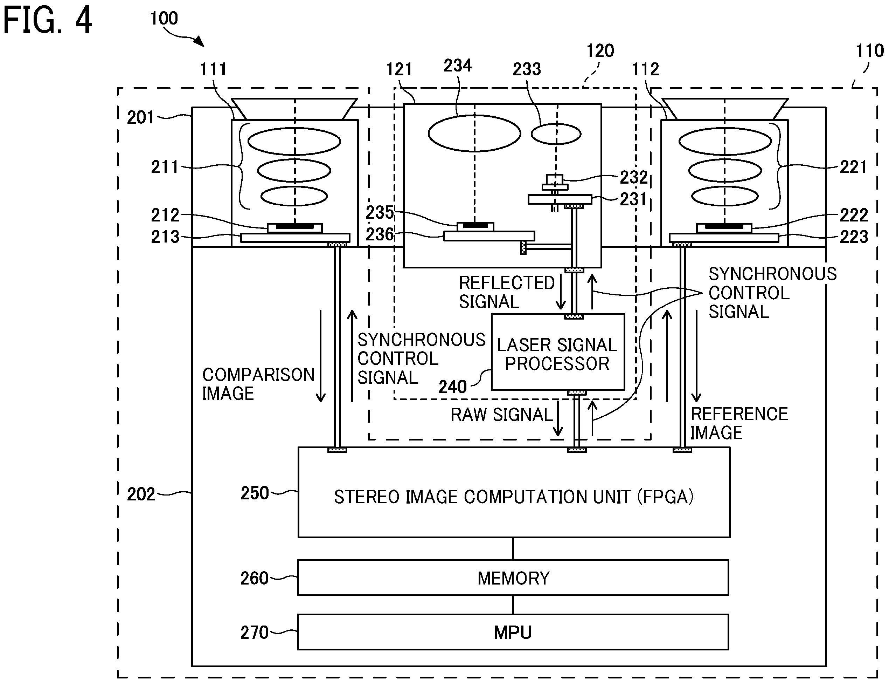

FIG. 4 illustrates an example of a hardware configuration of the distance measuring apparatus 100. The distance measuring apparatus 100 includes a sensor stay 201 and a control board housing 202. The left camera 111, the right camera 112, and an optical processor 121 are attached to the sensor stay 201. The optical processor 121 is disposed on a line sandwiched between the left camera 111 and the right camera 112, thereby reducing the size and cost of the distance measuring apparatus 100. The distance between the left camera 111 and the right camera 112 is called base-line length. A longer base-line length more likely produces a disparity. To downsize the distance measuring apparatus 100, the base-line length needs to be decreased. It is desirable to decrease the base-line length while not decreasing the precision.

The control board housing 202 houses a laser signal processor 240, a stereo image computation unit 250, a memory 260, and a micro-processing unit (MPU) 270. Since the laser signal processor 240 and the optical processor 121 are separate elements, the distance measuring apparatus 100 can be more freely designed and downsized.

In the present embodiment, the LiDAR range finder 120 including the optical processor 121 and the laser signal processor 240 is disposed between the left camera 111 and the right camera 112.

In the example in FIG. 4, the laser signal processor 240 and the stereo image computation unit 250 are configured as separate circuit boards; however, the laser signal processor 240 and the stereo image computation unit 250 may be configured as a common circuit board. Reducing the number of circuit boards can reduce the cost.

The elements of the sensor stay 201 are described below. As illustrated in FIG. 4, the left camera 111 includes a camera lens 211, an imaging device 212, and a sensor substrate 213. The extraneous light that has passed through the camera lens 211 is received by the imaging device 212, and is photoelectrically converted in a predetermined frame cycle. The signals that are obtained as a result of the above photoelectric conversion are processed by the sensor substrate 213, and a captured image is generated for each frame. The generated captured image is sequentially transmitted to the stereo image computation unit 250 as a comparison image.

The right camera 112 has a configuration similar to that of the left camera 111, and captures an image based on a synchronous control signal in synchronization with the left camera 111. The captured image is sequentially transmitted to the stereo image computation unit 250 as a reference image.

The optical processor 121 includes a light-source drive circuit 231, a laser beam source 232, and a projector lens 233. The light-source drive circuit 231 operates based on a synchronous control signal transmitted from the laser signal processor 240, and applies modulating electric current (light-source emission signal) to the laser beam source 232. Due to this configuration, the laser beam source 232 emits laser beams. The laser beams that are emitted from the laser beam source 232 are emitted to the outside through the projector lens 233.

In the present embodiment, it is assumed that an infrared semiconductor laser diode (LD) is used as the laser beam source 232, and near-infrared light with a wavelength of 800 nanometer (nm) to 950 nm is emitted as a laser beam. Moreover, it is assumed that the laser beam source 232 emits a laser beam having a pulsed waveform at prescribed time intervals according to the modulating electric current (light-source emission signal) applied by the light-source drive circuit 231. Further, it is assumed that the laser beam source 232 emits a pulsed laser beam having a short pulse width of about a few nanoseconds to several hundreds of nanoseconds at prescribed time intervals. However, no limitation is intended thereby, and the wavelengths or the pulse widths of the laser beams may be set differently.

The pulsed laser beams that are emitted from the laser beam source 232 are emitted as irradiation beams to the outside through the projector lens 233, and then an object existing in the irradiation direction of one of the laser beams is irradiated with some of the laser beams emitted through the projector lens 233. Note that the laser beams emitted from the laser beam source 232 are collimated into substantially parallel light by the projector lens 233. The irradiation area on an object irradiated with the laser beams is suppressed to a predetermined very small area.

The optical processor 121 further includes a light-receiving lens 234, a light-receiving element 235 (an example of a light receiving unit), and a received signal amplifier circuit 236. The laser beams that are emitted to the object existing in the irradiation direction of one of the laser beams uniformly scatter to all directions. Then, the light components that are reflected and return in the same optical path as the optical path of the laser beams that were emitted from the optical processor 121 are guided to the light-receiving element 235 through the light-receiving lens 234 as reflected light.

In the present embodiment, a silicon pin photodiode or an avalanche photodiode is used as the light-receiving element 235. The light-receiving element 235 photoelectrically converts the reflected light to generate a reflected signal. The received signal amplifier circuit 236 amplifies the generated reflected signal and then transmits the reflected signal to the laser signal processor 240.

The elements of the control board housing 202 are described below. The laser signal processor 240 transmits the irradiation direction and the raw signal (one-dimensional reflected signal 14) to the stereo image computation unit 250 based on the reflected signal transmitted from the optical processor 121.

The stereo image computation unit 250 is configured of, for example, a dedicated integrated circuit, such as a field-programmable gate array (FPGA) or an application specific integrated circuit (ASIC). The stereo image computation unit 250 has functions (central processing unit (CPU), random access memory (RAM), read-only memory (ROM), solid state drive (SSD), etc.) of a typical computer. The stereo image computation unit 250 outputs a synchronous control signal to control a timing of image capturing and a timing of emission or reception of the laser beams, to the left camera 111, the right camera 112, and the laser signal processor 240.

Moreover, the stereo image computation unit 250 inputs the comparison image transmitted from the left camera 111 or the reference image transmitted from the right camera 112, and the raw signal transmitted from the laser signal processor 240 to a distance information output unit obtained as a result of learning (described later) to generate a distance image. Alternatively, both the comparison image and the reference image may be input. The stereo image computation unit 250 stores the generated distance image in the memory 260.

The memory 260 stores the distance image generated by the stereo image computation unit 250. Moreover, the memory 260 provides a work area when the stereo image computation unit 250 and the MPU 270 execute various processes.

The MPU 270 controls the elements housed in the control board housing 202, and performs an analysis process of analyzing the distance image stored in the memory 260.

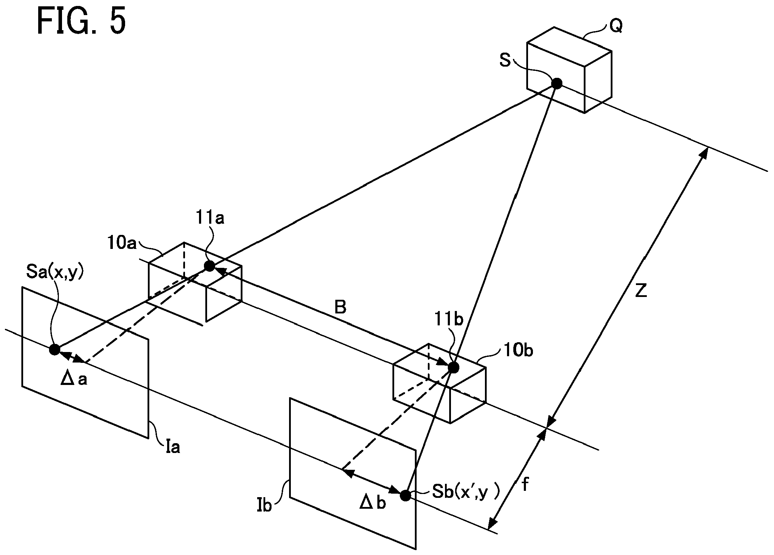

In the present embodiment, although distance measurement using the stereo camera may not be performed, the principle of distance measurement using the stereo camera is described referring to FIG. 5. FIG. 5 illustrates the principal of deriving a disparity value with respect to an object from a comparison image and a reference image by triangulation, and measuring the distance from the distance measuring apparatus 100 to the object using the disparity value.

First, it is assumed that the right camera 112 and the left camera 111 are arranged in parallel to each other. A point S on an object Q in a three-dimensional space is mapped at positions on the same horizontal line of the right camera 112 and the left camera 111. That is, the point S in each image is captured at a point Sa (x, y) in a comparison image Ia and a point Sb (x', y) in a reference image Ib. At this time, a disparity value d (in this case, an integer disparity value) is expressed as Equation 1 using Sa (x, y) and Sb (x', y).

$$d = x' - x \ \dots (1)$$

As illustrated in FIG. 5, when $\Delta a$ is a distance from the point Sa (x, y) in the comparison image Ia to the intersection between the image plane and the perpendicular line from the right camera 112, and $\Delta b$ is a distance from the point Sb (x', y) in the reference image Ib to the intersection between the image plane and the perpendicular line from the left camera 111, the disparity value $d = \Delta a + \Delta b$ is established.

Moreover, using the disparity value d can derive a distance Z of the right camera 112 and the left camera 111 to the object Q. Specifically, the distance Z is a distance from a plane including the focal position of the camera lens 211 and the focal position of a camera lens 221 to the specific point S on the object Q. The distance Z can be calculated with Equation 2 using a focal length F of the camera lens 211 and the camera lens 221, a base-line length B that is a length between the camera lens 211 and the camera lens 221, and a disparity value d.

$$Z = (B \times F)/d \ ... \ (2)$$

With Equation 2, the distance Z decreases as the disparity value d increases, and the distance Z increases as the disparity value d decreases. As it is clear from Equation 2, the distance corresponding to an integer disparity increases (resolution decreases) as the camera is smaller (as the base-line length B decreases).

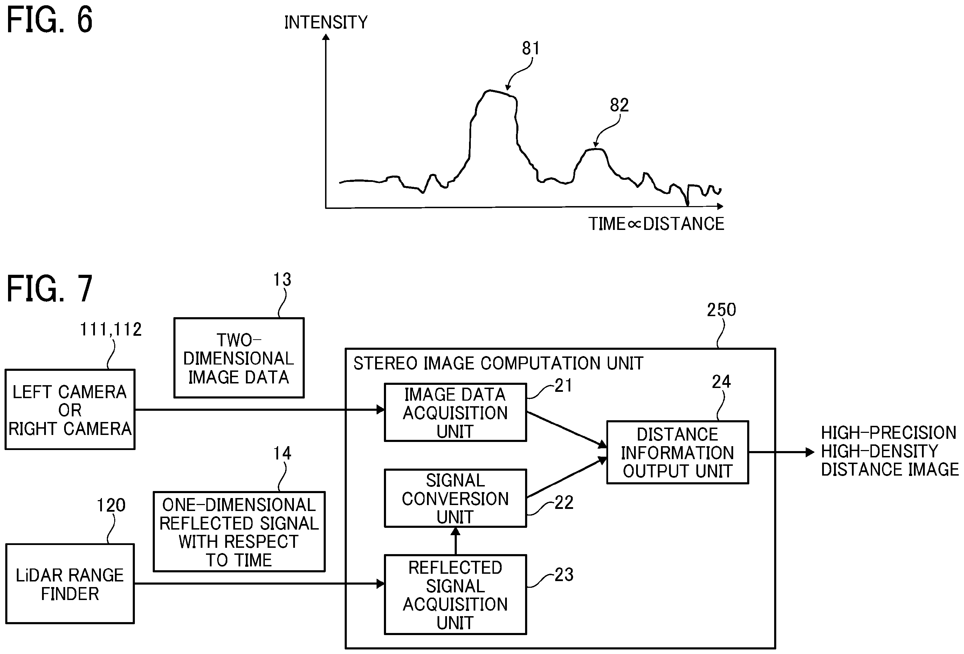

The principle of time measurement performed by the laser signal processor 240 is described below referring to FIG. 6. FIG. 6 schematically illustrates the intensity in chronological order when an emitted laser beam is reflected by an object and received. As illustrated in FIG. 6, a reflected signal is one-dimensional data (one-dimensional signal) in which the intensity is associated with the time. The horizontal axis plots the time and the vertical axis plots the intensity. The time is proportional to the distance to the object. Hence, the time and the distance have equivalent information. The distance is calculated based on the time until the reflected signal is detected.

Peaks 81 and 82 represent reflected signals indicating the distance to the object, and the other portion represents noises. In related art, a reflected signal near a peak is extracted by a method of detecting the maximum peak position or a method of detecting multiple positions of equal to or larger than a threshold value (multiple detection). In contrast, according to the present embodiment, the intensity in chronological order (= raw signal) illustrated in FIG. 6 is used. Thus, correct weak signals can be used although noises are included.

Functions of the stereo image computation unit 250 are described below referring to FIG. 7. FIG. 7 is an example of a functional block diagram when functions of the stereo image computation unit 250 are divided into blocks. The stereo image computation unit 250 includes an image data acquisition unit 21, a signal conversion unit 22, a reflected signal acquisition unit 23, and a distance information output unit 24. The functions of the stereo image computation unit 250 are functions or measures that are implemented by a CPU included in the stereo image computation unit 250 and executing a program developed from a SSD to a RAM.

The image data acquisition unit 21 acquires a reference image or a comparison image from the right camera 112 or the left camera 111. The present embodiment does not perform disparity computation. Hence, the reference image or the comparison image acquired from the right camera 112 or the left camera 111 is merely referred to as image data.

The reflected signal acquisition unit 23 acquires a raw signal of a reflected signal of a laser beam output from the laser signal processor 240. The raw signal may be a digital signal in advance, or the reflected signal acquisition unit 23 may convert the raw signal into a digital signal.

The signal conversion unit 22 converts the reflected signal of the laser beam into two-dimensional intensity data 12. Thus, the number of dimensions of the image data can be matched with that of the reflected signal. The details of the conversion will be described later.

The distance information output unit 24 receives as inputs the image data and the intensity data and outputs a distance image. The distance information output unit 24 is, for example, a regression model that is constructed through machine learning. The distance image is image data having distance information on a pixel basis; however, in the present embodiment, the distance image does not include a pixel value as a movie (or may include a pixel value as a movie). Thus, the distance image is data having the distance information arranged in a two-dimensional array.

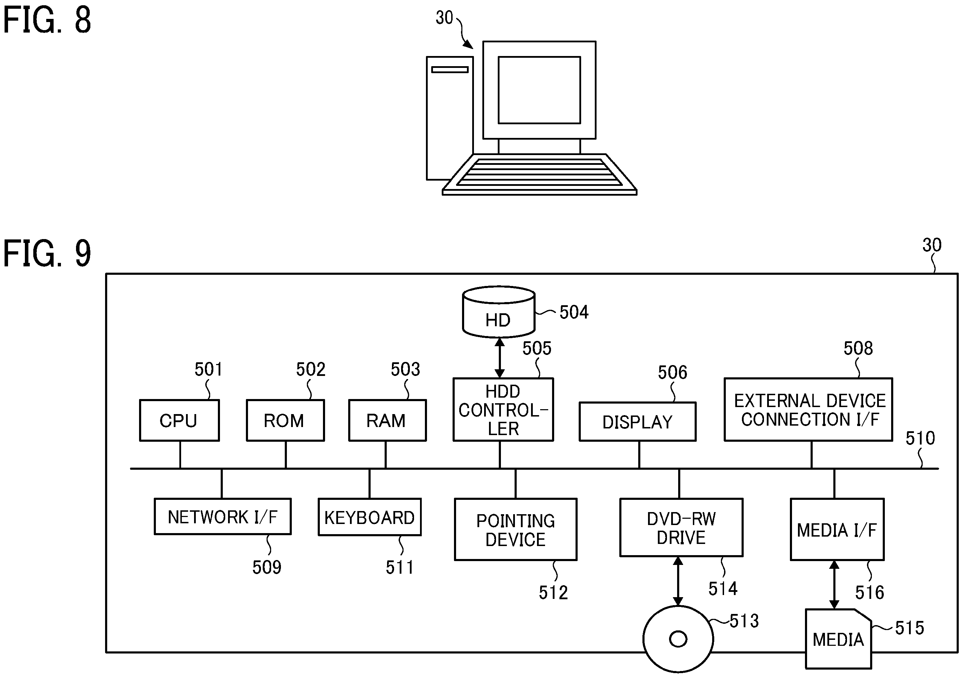

An information processing apparatus 30 that is used during learning is described below referring to FIGs. 8 and 9. FIG. 8 is a schematic perspective view of the information processing apparatus 30. The information processing apparatus 30 stores leaning data in a hard disk drive (HDD) or the like and learns learning data to construct the distance information output unit 24.

The information processing apparatus 30 that is used for learning is, for example, a personal computer (PC) or a work station. The information processing apparatus 30 may be a computer having processing performance to a certain degree. The information processing apparatus 30 desirably includes a graphics processing unit (GPU). Alternatively, the information processing apparatus 30 may be a tablet device or a smartphone.

The information processing apparatus 30 may employ a client server system instead of a stand alone system. In this case, a client transmits learning data to a server, and the server learns the learning data to construct the distance information output unit 24.

FIG. 9 illustrates an example of a hardware configuration of the information processing apparatus 30. As illustrated in FIG. 9, the information processing apparatus 30 is implemented by a computer. The information processing apparatus 30 includes a central processing unit (CPU) 501, a read only memory (ROM) 502, a random access memory (RAM) 503, a hard disk (HD) 504, a hard disk drive (HDD) controller 505, a display 506, an external device connection interface (I/F) 508, a network I/F 509, a bus line 510, a keyboard 511, a pointing device 512, a digital versatile disc rewritable (DVD-RW) drive 514, and a medium I/F 516.

Among these components, the CPU 501 controls the entire operation of the information processing apparatus 30. The ROM 502 stores a control program such as an initial program loader (IPL) to boot the CPU 501. The RAM 503 is used as a work area for the CPU 501. The HD 504 stores various data such as a program. The HDD controller 505 controls reading and writing of various data from and to the HD 504 under control of the CPU 501. The display 506 displays various information such as a cursor, menu, window, characters, or image. The external device connection I/F 508 is an interface that connects the computer to various external devices. Examples of the external devices include a universal serial bus (USB) memory and a printer. The network I/F 509 is an interface that controls communication of data through the communication network. The bus line 510 may be an address bus or a data bus, which electrically connects various elements such as the CPU 501 of FIG. 9.

The keyboard 511 is an example of an input device provided with a plurality of keys for allowing a user to input characters, numerals, or various instructions. The pointing device 512 is an example of an input device that allows a user to select or execute a specific instruction, select a target for processing, or move a cursor being displayed. The DVD-RW drive 514 reads and writes various data from and to a DVD-RW 513, which is an example of a removable storage medium. The removable storage medium is not limited to the DVD-RW and may be a digital versatile disc-recordable (DVD-R) or the like. The medium I/F 516 controls reading and writing (storing) of data from and to a storage medium 515 such as a flash memory.

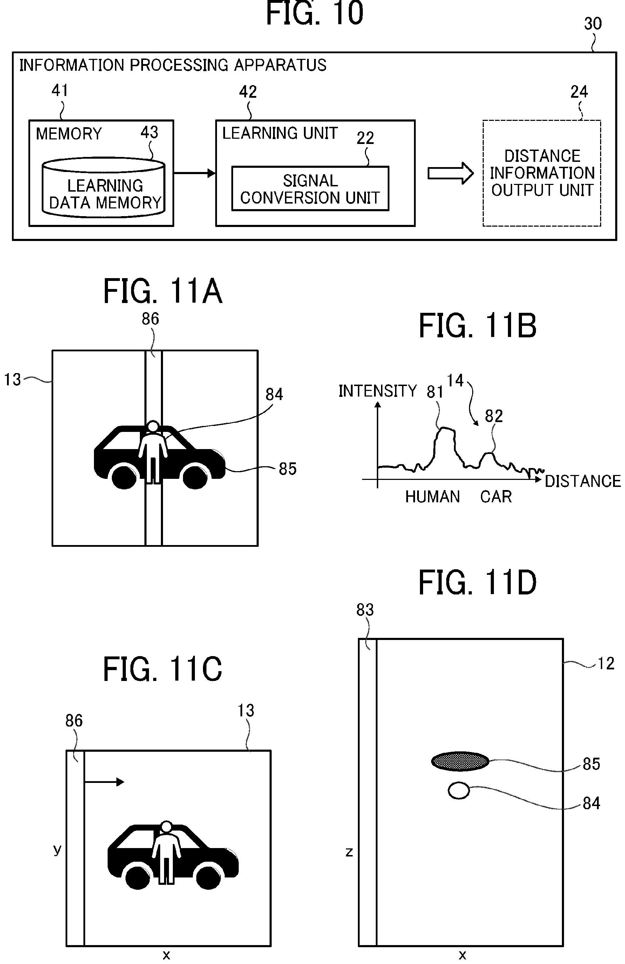

FIG. 10 is a functional block diagram illustrating an example in which functions of the information processing apparatus 30 are divided into blocks. The information processing apparatus 30 includes a memory 41, a learning unit 42, and a distance information output unit 24. Among these components, the distance information output unit 24 is constructed through learning and hence is indicated by dotted lines. The learning unit 42 and the distance information output unit 24 included in the information processing apparatus 30 are functions or measures implemented by the CPU 501 included in the information processing apparatus 30 executing a program developed in the RAM 503 from the HD 504. The memory 49 is formed in at least one of the HD 504 and the RAM 503 included in the information processing apparatus 30.

The memory 41 has constructed therein a learning data memory 43. The learning data memory 43 stores learning data. The learning data according to the present embodiment has a set of one image data serving as input data, a number x of reflected signals (raw signals) serving as input data, and an answer distance image serving as training data. A plurality of sets of learning data are prepared for a wide variety of expected scenes. The number x of reflected signals corresponds to the number of times the LiDAR range finder 120 performs scanning in an x direction (a direction along the x-axis, likewise, a y direction indicating a direction along the y-axis and a z direction indicating a direction along the z-axis), which will be described later. When the number x of pixels are disposed in the x direction and scanning is performed for each pixel, the number x of reflected signals are obtained.

The learning unit 42 learns correspondence between input data and training data, for example, using an approach of one of various kinds of machine learning such as deep learning. The learning unit 42 includes a signal conversion unit 22 for converting a one-dimensional reflected signal 14 into two-dimensional intensity data 12 like the stereo image computation unit 250.

Since the training data is the answer distance image, the distance information output unit 24 that estimates (outputs) a distance image in response to input data is obtained as a result of learning. As described above, when the deep learning is employed, layering allows the distance information output unit 24 to extract a complicated feature value. The details of the learning method will be described later.

Simply inputting signals in different formats and learning the signals may cause troubles as follows.

1. When pieces of input data have different meanings, convergence of learning (a timing at which learning is completed) may be delayed.
2. In addition to 1, learning may not properly progress (correspondence between an input and an output may not be learned).
3. Since deep learning obtains expression that exceeds recognition of a human, the inside of deep learning is a black box. The black box makes the "description (description on the base of determination for the result output through deep learning)" be more complicated and difficult to be understood.

In the present embodiment, data is rearranged by a predetermined process in a phase previous to learning, as described below. Rearrangement of data in this case is matching the numbers of dimensions of signals in different formats with each other.

A method of the signal conversion unit 22 converting a reflected signal into intensity data is described referring to FIG. 11. FIG. 11 illustrates a relationship between image data and a reflected signal. The signal conversion unit 22 includes converting a one-dimensional reflected signal 14 into a signal in a two-dimensional format to generate two-dimensional intensity data 12. Thus, the x-axis of the two-dimensional image data 13 is associated with the x-axis of the intensity data. Associating axes of two signals with each other means that the axes of the two signals represent distances in the same direction. Details are described below.

FIG. 11(a) illustrates a two-dimensional region in an actual space which is irradiated with spotlight of the LiDAR range finder 120. The irradiation directions (x direction and y direction) of the LiDAR range finder 120 are control values, and hence the two-dimensional region is obtained by calculation. In FIG. 11(a), spotlight 86 has a vertically long shape in the y direction. The spotlight 86 may have a laterally long shape, or spotlight with a dot shape may provide scanning vertically or laterally.

A human 84 and a car 85 exist in the two-dimensional region. FIG. 11(b) illustrates a reflected signal obtained with the spotlight 86 at a certain x coordinate where the human 84 and the car 85 exist. That is, FIG. 11(b) is a distribution diagram having the horizontal axis plotting the distance (calculated from the time) and the vertical axis plotting the intensity. The diagram can be expressed as one-dimensional data. In FIG. 11(a), the spotlight 86 is reflected by a plurality of objects and hence two peaks 81 and 82 exist.

In contrast, the image data captured by the left camera 111 or the right camera 112 is two-dimensional data, which does not correspond to the one-dimensional reflected signal 14 of the LiDAR range finder 120 (the formats of signals differ from each other).

As illustrated in FIG. 11(c), the LiDAR range finder 120 emits the spotlight 86 to associate the upward direction of the vertically long spotlight 86 with the upper edge of the image data and associate the downward direction of the spotlight 86 with the lower edge of the image data. That is, the vertical dimension of the irradiation range is matched with the height of the image data. The LiDAR range finder 120 provides scanning with the spotlight 86 desirably by 1 [pix] each in the lateral direction. That is, the two-dimensional region in the actual space is scanned with the vertically long spotlight 86 in the x direction. Scanning may be provided with the spotlight 86 overlapping.

As illustrated in FIG. 11(d), the distance of the acquired reflected signal is associated with the vertical axis (y-axis) of the image data, and a plurality of reflected signals are arranged in a manner associated with the x coordinates (the plurality of reflected signals are spread in the x direction). Moreover, the intensity obtained with each spotlight is held in a manner associated with the x coordinate and the z coordinate. As the z coordinate is lower, the distance is smaller. As the z coordinate is upper, the distance is larger. That is, the distance to the object held in the reflected signal is associated with the height direction of the two dimensions, the scanning position when the object is horizontally scanned is associated with the lateral direction of the two dimensions, and the intensity of the reflected signal is arranged in association with the height direction (y direction) and the lateral direction (x direction).

A distance range 83 in FIG. 11(d) indicates the distance to be measured with the spotlight 86 illustrated in FIG. 11(c). The distance range 83 represents a signal obtained when a laser beam emitted within a spot having a certain vertical width (y) is reflected and returned from an object. The distance range 83 is signal (wave) data to a predetermined distance. For example, it is assumed that the spotlight 86 is emitted in a range of [horizontal pixels $\times$ vertical pixels = 1 $\times$ 10] based on an image unit system. When an object with a length of 120 [m] at maximum exists in the range, the maximum value of z after conversion (in the case of FIG. 11(d), the upper edge) is 120 [m]. Signal data (possibly involving noises) up to the distance is acquired. When conversion is performed into a two-dimensional map as illustrated in FIG. 11(d), the maximum distance is discretized with a predetermined resolution (for example, 1 [m] or the like). In this case, the vertical width z in FIG. 11(d) is 120.

Thus, the horizontal axis in FIG. 11(d) corresponds to the x-axis, and the vertical axis corresponds to the distance and corresponds to the z-axis in the actual space. FIG. 11(d) becomes two-dimensional intensity data 12 of which the intensity of the reflected signal is associated with a certain x and a certain z. In this way, the reflected signal is converted so that the x-axis of the image data and the lateral direction of the reflected signal converted into the two dimensions represent length information in the horizontal direction.

This corresponds to a bird view (indicating where an object is located in an xz plane). FIG. 11(d) illustrates regions where the human 84 and the car 85 exist, and indicate that the car 85 is farther than the human 84 and is larger than the human 84 in the x direction. Although not clearly illustrated in FIG. 11(d), the intensities of reflected signals of objects other than the car and the human are recorded in a manner associated with x and z.

Note that information about the y direction is lost in the intensity data. That is, the one-dimensional reflected signal 14 can be expressed as two-dimensional data although the y coordinate disappears. The bird view is created while scanning with the vertically long spotlight 86 is provided in the lateral direction; however, scanning with laterally long spotlight may be provided in the vertical direction. In this case, the y-axis of image data corresponds to the y-axis of intensity data. In this case, the reflected signal is converted such that the y-axis of the image data and the height direction of the reflected signal converted into the two dimensions represent length information in the height direction.

The signal conversion unit 22 converts the reflected signal such that, among length information in directions of a plurality of dimensions (in this case, two dimensions) held by the image data and length information in directions of a plurality of dimensions (in this case, two dimensions) held by the reflected signal having the format matched, length information in a direction of at least one of the plurality of dimensions of the image data represents length information in a direction of at least one of the plurality of dimensions of the intensity data.

As far as the axes are aligned as the final result, a desirable process and a desirable parameter can be applied.

For example, the distance measuring apparatus 100 or the information processing apparatus 30 may perform convolutional computation (described later) on image data. Moreover, for example, since the size of image data does not have to match the size of intensity data, two or more strides may be set during convolutional computation on a RGB image. The convolutional computation may be applied a plurality of times (for example, filters with different sizes may be used to perform convolution two times). Likewise, for intensity data, convolutional computation may be performed and then the data may be learned, or the data may be used for an output of a distance image.

As described above, the distance measuring apparatus according to the present embodiment matches the numbers of dimensions with each other so that the learning unit 42 likely learns signals in different formats, to unify the two-dimensional image data 13 and the one-dimensional reflected signal 14 into two-dimensional expression. For the unification, an axis of the image data 13 is associated with an axis of the one-dimensional reflected signal 14 so that the axes of the signals in different formats represent distances in the same direction. Thus, convergence rate of learning can be increased and learning probability (correct correspondence of an output for an input) can be improved.

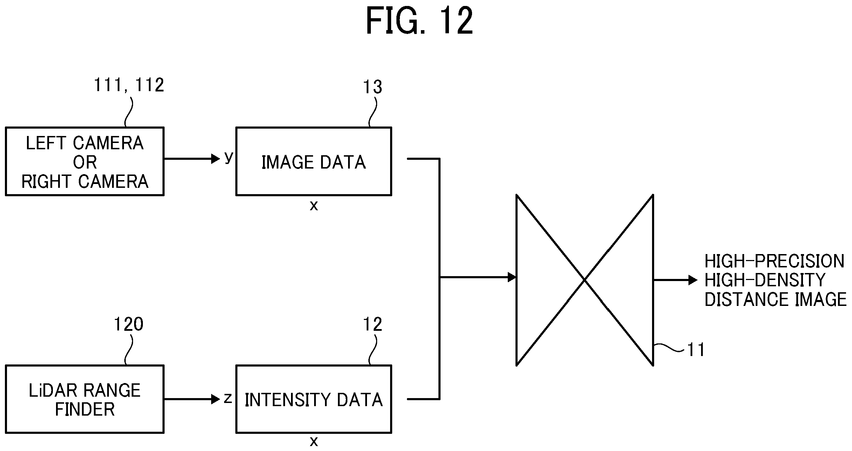

FIG. 12 illustrates a general arrangement of the distance measuring apparatus 100 according to the present embodiment. As described above referring to FIG. 11, the left camera 111 or the right camera 112 outputs two-dimensional image data 13 of $x \times y$, and the one-dimensional reflected signal 14 output from the LiDAR range finder 120 becomes two-dimensional intensity data 12 of $x \times z$. The two-dimensional image data 13 and the intensity data 12 are input to, for example, the neural network 11 (in the present embodiment, the distance information output unit 24 performs computation based on the neural network 11), and the neural network 11 outputs a high-precision high-density distance image.

That is, the distance information output unit 24 converts the two-dimensional image data having the lateral direction along the x-axis and the height direction along the y-axis and the intensity data of the reflected signal converted into the two dimensions having the lateral direction along the x-axis (or z-axis) and the height direction along the z-axis (or y-axis) into the high-precision high-density distance image.

In the present embodiment, combination of two signals in different formats has been described above. However, the number of different signals is not limited as long as meanings (in which direction the distance is indicated) can be aligned with each other in at least one dimension among the respective axes of the two dimensions. For example, the image data captured by the left camera 111 or the right camera 112, the reflected signal obtained by the LiDAR range finder 120, and sound data can be combined.

Machine learning includes three methods of supervised learning, unsupervised learning, and reinforcement learning. In the present embodiment, supervised learning is used. In supervised learning, deep learning is mainly described. Methods of machine learning include perceptron, deep learning, support vector machine, logistic regression, naive Bayes, decision tree, random forest, and so forth, and the method of machine learning is not limited to the method described according to the present embodiment.

In deep learning, a neural network 11 in which a parameter is randomly initialized is prepared, and input data is input to an input layer of the neural network 11. The parameter is a weight of connection between nodes (described later). The input data input to the input layer is transferred toward an output layer. The direction is hereinafter referred to as forward or forward propagation. The learning unit 42 learns the difference (loss) between output data output from the output layer of the neural network 11 and image data (answer image data) prepared as answer data, answer data (1 or 0) indicating one of two classes, or answer data (data with answer class being 1) according to multi-class classification. Additionally describing the multi-class classification, answer data represents, for example, that a label of cat is attached to learning data for an image of a cat. The learning unit 42 propagates the difference in a direction opposite to the input direction by using an optimization method. The direction is hereinafter referred to as backward or backward propagation. The difference corresponds to the value of the parameter, and hence the parameter is updated in accordance with the amount of transferring the difference.

In an initial learning state, learning of the parameter has not been progressed, and the neural network 11 may not output a correct value as a forward result. For example, regarding a neural network 11 that performs classification into multiple classes of 10 classes (label 1: cat, label 2: dog, label 3: bird, ..., label 10: fish), when input data is a cat image with the label 1 attached, a large numeral may be output to a class other than the class with the label 1 as an output result.

When the maximum value of output data is assumed as 1.0, the optimal case is [1.0, 0.0, 0.0, 0.0, 0.0, 0.0, 0.0, 0.0, 0.0, 0.0] (answer). In a case of a neural network 11 which has not learned, the numerals for the other classes may increase. Hence, when the parameter is learned, the difference between the output data for each class and the answer data (the value of 1 or 0) is evaluated using a predetermined relational expression (referred to as loss function) and the difference serves as a loss. The result is sent from the output layer of the neural network 11 to the input layer to update the parameter. The way of sending at this time is determined by an optimization function, and is sent backward with respect to the direction with the highest effect. Accordingly, when the same image is input next, a more correct output result can be obtained.

The above-described process is repeated using various images, and hence the neural network 11 is trained to be gradually able to output a correct answer label from learning data.

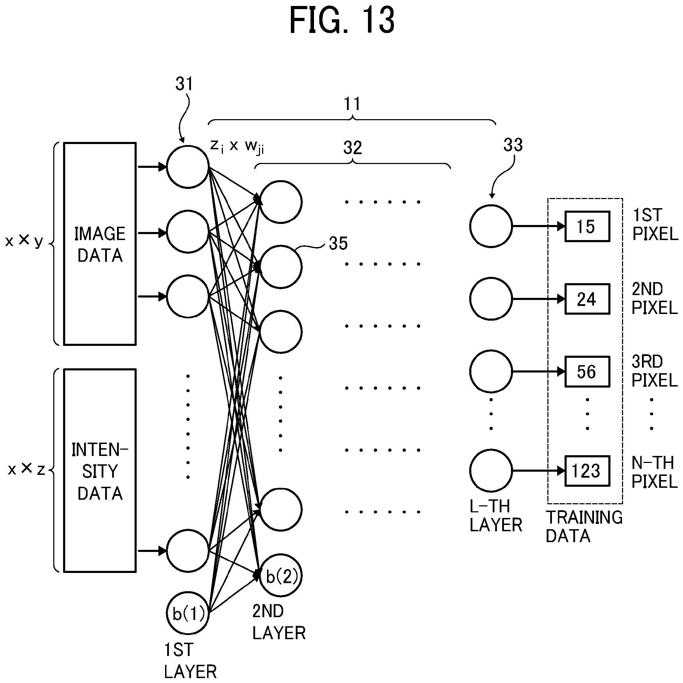

In deep learning (deep neural network), machine learning using convolutional computation is referred to as convolutional neural network (CNN). In the present embodiment, CNN is mainly used. In the present embodiment, an example of learning a feature through deep learning (deep neural network, DNN) is described to describe CNN. FIG. 13 illustrates a neural network 11 in which a number L of layers from an input layer 31 to an output layer 33 are fully connected to one another. A neural network having multiple layers is referred to as DNN. A layer between the input layer 31 and the output layer 33 is referred to as an intermediate layer 32. The number of layers and the number of nodes 35 are merely examples.

The input layer 31 receives, as inputs, the image data and the intensity data as described above. Hence, the number of nodes of the input layer 31 is "x×y + x×z". The number of nodes of the output layer 33 equals to the number of pixels of an answer distance image. If the number of pixels of the answer distance image is M×N, the number of nodes of the output layer 33 is "M×N".

In the neural network 11, a node 35 in an 1-th layer (1: 2 to L) is connected to all nodes 35 in an (1-1)-th layer, and a product of an output z of each node 35 of the (1-1)-th layer and a weight w of connection is input to the nodes 35 of the 1-th layer. Equations 3a and 3b represent a method of calculating an output signal of the node 35.

$$u_j^{(l)} = \sum_{i=1}^{I} w_{ji}^{(l,l-1)} z_i^{(l-1)} + b^{(l-1)}$$

$$z_j^{(l)} = f\left(u_j^{(l)}\right)$$

$$\text{... (3a) and (3b)}$$

In Equations 3a and 3b, $w_{ji}^{(1,1-1)}$ is a weight between a j-th node of the 1-th layer and an i-th node of the (1-1)-th layer, $u_j^{(1)}$ is a value of the j-th node of the 1-th layer, $z_i^{(1-1)}$ is an output of the i-th node of the (1-1)-th layer, and b is a bias. I denotes the number of nodes of the (1-1)-th layer. f denotes an activation function of the node. Known examples of the activation function include rectified linear unit (ReLU), hyperbolic tangent (tanh), and Sigmoid. The nodes of the input layer 31 transfer a feature vector to the second layer, and hence the nodes are not activated.

As expressed in Equations 3a and 3b, in the nodes 35 of the 1-th layer, inputs are converted into values between 0 and 1 and output to the nodes 35 of the (1+1)-th layer. The process is repeated from the input layer 31 to the output layer 33.

In the present embodiment, an output of a node of the output layer 33 is made close to a pixel value of the answer distance image, and hence a regression problem to predict quantitative data is used. Thus, the activation function of the nodes of the output layer 33 may be identical mapping (no conversion). Each node of the output layer learns to output a value close to the pixel value of a corresponding pixel in the answer distance image (in this case, distance information).

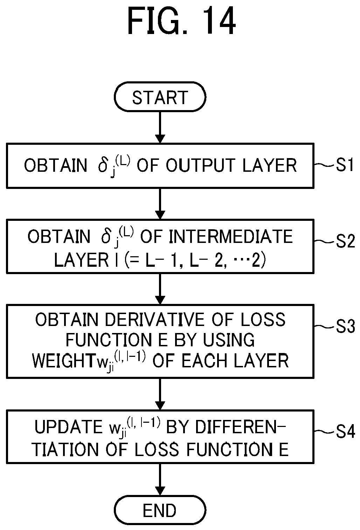

FIG. 14 is an example of a flowchart describing a process during learning of the neural network 11.

During learning of the neural network 11, image data, intensity data, and an answer distance image (training data) when the two pieces of data are obtained are prepared. Referring to FIG. 13, pixel values of the answer distance image are from 0 to 255; however, pixel values are typically normalized to values from 0 to 1.

There is known a loss function that evaluates the difference between the output of each node of the output layer 33 and the training data. A loss function E in the case of regression model frequently uses a square loss as expressed by Equation 4.

$$E = \frac{1}{2} \sum_j \left(z_j - d_j\right)^2$$

$$\text{... (4)}$$

The neural network learns by a learning method called backpropagation. The process of learning is as follows.

S1. The learning unit 42 obtains $\delta_j^{(L)}$ of the output layer (L represents the output layer). $\delta_j^{(L)}$ is obtained by differentiating the loss function E by $u_j^{(L)}$. In general, $\delta_j^{(L)} = z_j - d_j$ may be established. Note that dj is a pixel value (in the present embodiment, distance) of an answer of the j-th node.

S2. The learning unit 42 obtains $\delta_j^{(L)}$ of the intermediate layer 1(= L - 1, L - 2, ..., 2) with Equation 5.

$$\delta_j^{(l)} = \sum_k \delta_k^{(l+1)} \left( w_{kj}^{(l+1)} f' \left( u_j^{(l)} \right) \right)$$

$$\dots (5)$$

S3. The learning unit 42 obtains a derivative of the loss function E by using a weight $w_{ji}^{(1,1-1)}$ of each layer with Equation 6.

$$\frac{\partial E}{\partial w_{ji}^{(l)}} = \delta_j^{(l)} z_i^{(l-1)}$$

$$\dots (6)$$

S4. The learning unit 42 updates $w_{ji}^{(1,1-1)}$ by differentiation of the loss function E with Equation 7. $\eta$ denotes a learning coefficient indicative of the leaning amount of one-time learning.

$$w_{ji}^{(l)} = w_{ji}^{(l)} - \eta \frac{\partial E}{\partial w_{ji}^{(l)}}$$

$$\dots (7)$$

Thus, the difference $(z_j - d_j)$ of the output layer 33 is propagated backward from the output layer 33 to the input layer 31 to update the weight $w_{ji}^{(1,1-1)}$. The update corresponds to learning.

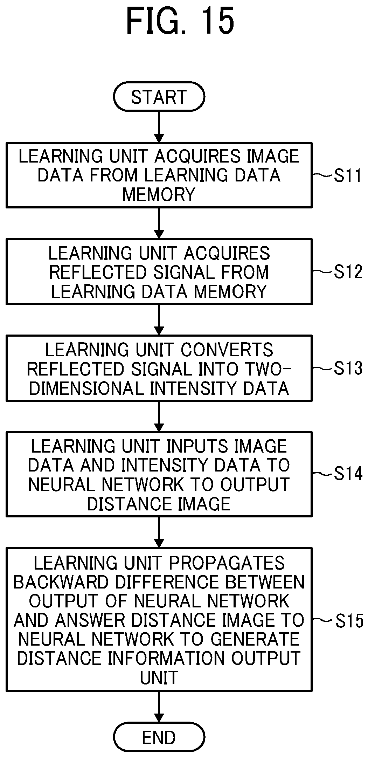

FIG. 15 is an example of a flowchart describing a procedure of the information processing apparatus 30 to generate the distance information output unit 24.

The learning unit 42 acquires image data from the learning data memory 43 (S11). The learning unit 42 acquires a reflected signal from the learning data memory 43 (S12).

The signal conversion unit 22 of the learning unit 42 converts a number x of reflected signals into two-dimensional intensity data 12 (S13). That is, one-dimensional reflected signals are arranged in the z direction for each x coordinate.

The distance information output unit 24 of the learning unit 42 inputs the image data and the intensity data to the neural network 11 and outputs a distance image (S14).

The learning unit 42 propagates backward the difference between the output of the neural network 11 and an answer distance image to the neural network 11, to generate the distance information output unit 24 (S15).

The flowchart in FIG. 15 provides one-time updating; however, actually, updating is repeatedly performed on learning data.

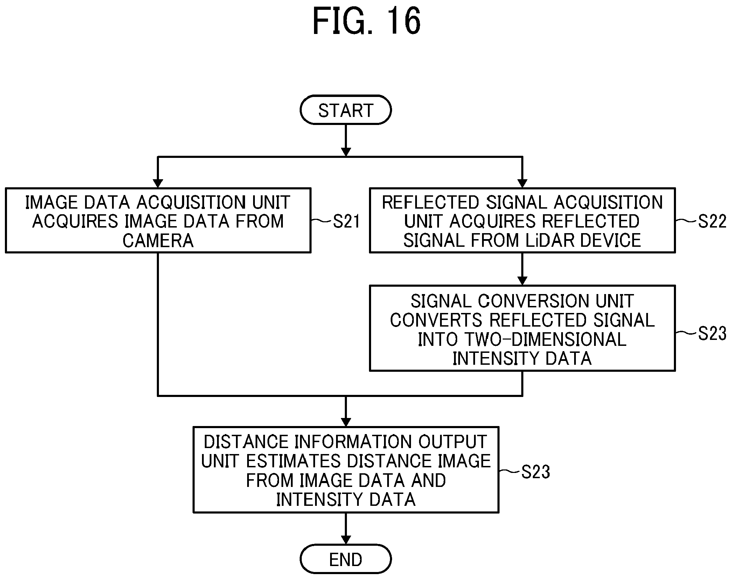

FIG. 16 is an example of a flowchart describing a procedure of the distance measuring apparatus 100 according to the present embodiment to generate a distance image. The process in FIG. 16 is repeatedly executed when the distance measuring apparatus 100 generates a distance image.

The image data acquisition unit 21 acquires image data from the left camera 111 or the right camera 112 (S21). The reflected signal acquisition unit 23 acquires a reflected signal from the LiDAR range finder 120 (S22). Although steps S21 and S22 are desirably executed in parallel, the reflected signal acquisition unit 23 acquires a number x of reflected signals acquired because scanning with vertically long spotlight 86 is provided a number x of times in the x direction while the image data acquisition unit 21 acquires one image data.

The signal conversion unit 22 converts the number x of reflected signals 14 into two-dimensional intensity data 12 (S23). That is, one-dimensional reflected signals are arranged in the z direction for each x coordinate.

The distance information output unit 24 obtained through the machine learning estimates a distance image from the image data and the intensity data (S24).

As described above, the distance measuring apparatus according to the present embodiment converts the one-dimensional reflected signal 14 into two-dimensional intensity data 12. Thus, the numbers of dimensions of signals in different formats are matched with each other, and the direction in which the distance is indicated by each data of at least one dimension is matched with that of another data. The two-dimensional image data 13 and the one-dimensional reflected signal 14 can be unified into two-dimensional expression, and convergence rate of learning can be increased and learning probability (correct association of the output with the input) can be improved.

After the numbers of dimensions are matched and the direction in which the distance is indicated by each data of at least one dimension is matched, correspondence between the input data and the output data is learned using a method of machine learning such as deep learning. Layering allows extraction of a feature value that exceeds a previously set logic figured out by a human. That is, even when signals in different forms are input, output data close to an answer distance image can be obtained. Thus, even when the format of the signal of the left camera 111 or the right camera 112 differs from the format of the signal of the LiDAR range finder 120, highly robust distance measurement is available for a variety of scenes without a human figuring out a logic of how signals in different formats are combined.

Described according a second embodiment is a distance measuring apparatus that generates a feature image obtained by extracting a feature from image data, superposes intensity data on the feature image, and associates the x- and y-axes of the image data and those of the intensity data with each other. Correspondence for the two axes of the x- and y-axes are ensured, and hence the correspondence contributes to an increase in convergence rate of learning and an improvement in learning probability.

In the present embodiment, convolutional computation is performed and hence convolutional computation is additionally described. Note that convolutional computation may be also applied to the first embodiment.

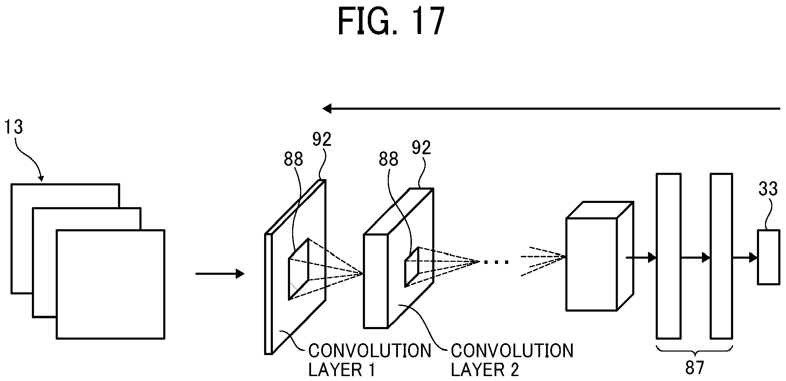

FIG. 17 illustrates an example of a configuration of CNN. Convolution using a filter is performed on plural pieces of learning data in a convolution layer 1, and convolution using a filter is performed on the result of the convolution layer 1 in the convolution layer 2. Similar calculation is performed toward the output layer and a fully connected layer 87 is provided in front of the output layer 33. In this way, the CNN performs the convolutional computation using the filters, thereby providing feature extraction such as applying an edge extraction filter.

The output layer 33 outputs pixels of the image data. FIG. 17 is an example network for object recognition. The present embodiment provides a network structure that outputs an image while receiving an image as an input. Thus, a configuration is established such that "the number of inputs" = "a desirable number of pixels", and "the number of outputs" = "a desirable number of pixels". However, the configuration is not limited thereto.

The fully connected layer 87 has the same structure as the structure of the neural network illustrated in FIG. 13. Note that the CNN may include a pooling layer between a convolution layer and a convolution layer. The pooling layer is a layer that extracts the maximum value and mean value on a block basis of a feature image to generate a new image.

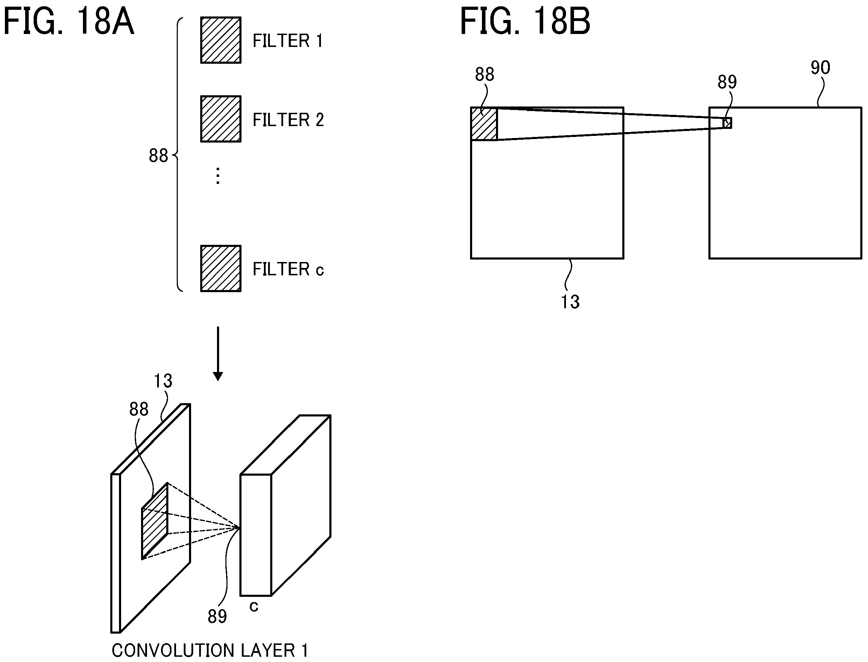

Convolutional computation is additionally described referring to FIGs. 18A and 18B. FIGs. 18A and 18B each illustrate a relationship between a filter and an operation result. As illustrated in Fig. 18A, a convolution layer 1 executes convolutional computation between a filter 88 and a predetermined region of image data 13. The convolutional computation calculates a product of corresponding pixels between the image data 13 and the filter 88, and adds the products by the amount of the filter size (for example, when convolution is performed by using a $3\times3$ filter, the sum of nine products). Thus, the result of the convolutional computation using one filter is a numeral of 89. In FIG. 18A, a vertex of a pyramid of which the bottom surface is the filter has the numeral of 89. In FIG. 18B, the pixel value of a pixel in the right figure has the numeral of a pixel.

The filter is shifted by a predetermined amount in the order from the upper left of the image, and the convolutional computation is executed on the entire surface of the image data 13. Consequently, the output becomes a two-dimensional feature image 90, and it is hereinafter referred to as feature map. The amount of shifting the filter is referred to as stride. Increasing the number of strides has the same effect as reduction in size of data. Hence, the size of the feature image is further reduced.

In this way, feature images 90 are generated by the number of filters. The number of feature images 90 obtained by convolutional computation equals to the number of filters. When a number c of filters 88 are provided, a number c of feature images 90 can be obtained. In FIG. 18A, the feature images 90 have a block shape in which the feature images 90 are layered by the number c that is the number of filters.

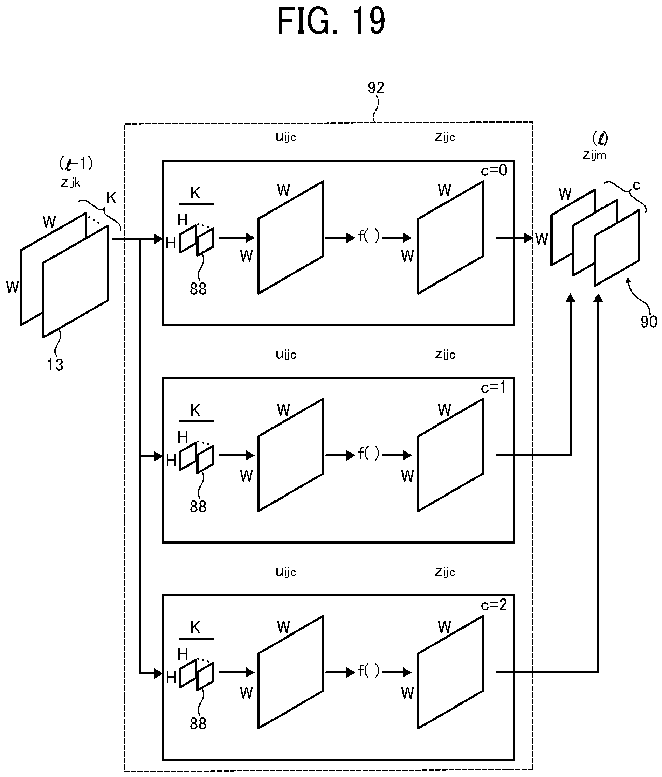

FIG. 19 illustrates a convolution layer in which an activation function is applied to convolutional computation. It is assumed that image data for a number K of channels is input to correspond to a color image. In a case of RGB, K = 3. When it is assumed that the convolution layer is the 1-th layer, the pixels of the input image data 13 can be expressed

as $z_{ijk}^{(1-1)}$.

When the number of kinds of filters (the number of filters) is three, a number c of filters 88 (equal to the number K of channels) are prepared. Computation with each filter is performed while c = 0 to 2 to calculate $u_{ijc}$. The computation is performed with an equation as follows. Convolution is performed on the image data 13 and the filters 88 in the channel and then the results are added over the entire channels on a pixel basis.

$$u_{ijc} = \sum_{k=0}^{K-1} \sum_{p=0}^{H-1} \sum_{q=0}^{H-1} z_{i+p,j+q,k}^{(l-1)} h_{pqkc}$$

$$\dots (8)$$

Thus, the output of a filter is for a channel regardless of the number K of channels. Since $u_{ijc}$ has been obtained, it is activated using an activation function f() to obtain $z_{ijc}$. This value is an output of the convolution layer and becomes a feature image 90 (feature map).

The output of the convolution layer is W×W×c when the size of the input is W×W×K (in the case of stride 1). Based on this, the convolution layer can be considered as a monolayer neural network in which a number W×W×K of nodes are connected to a number W×W×c of nodes. A node has a weight of $h_{pqkc}$. Note that the weight is common between nodes of the same channel. In this way, since the weight of the convolution layer represents the filter, the file can be optimized by backpropagation.

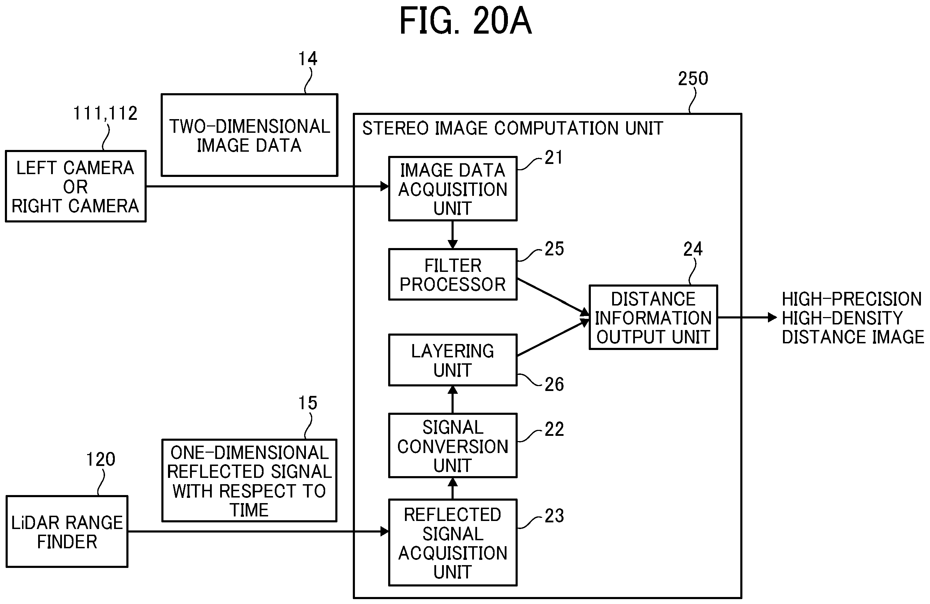

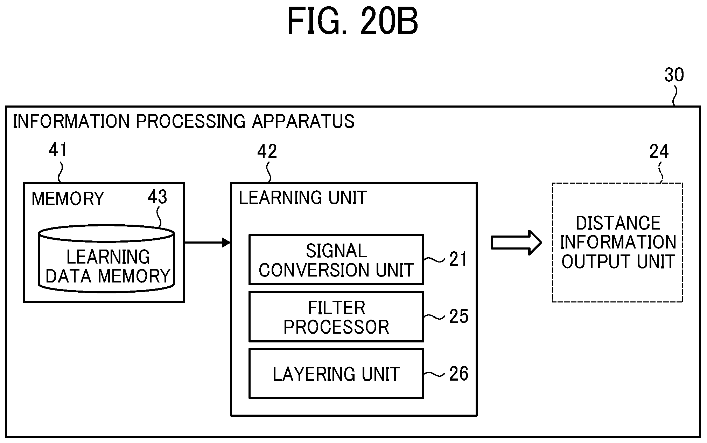

FIGs. 20A and 20B are examples of functional block diagrams when functions of the distance measuring apparatus 100 and the information processing apparatus 30 are divided into blocks. FIG. 20A is an example of a functional block diagram when functions of the stereo image computation unit 250 are divided into blocks. Points different from those in FIG. 6 are mainly described with reference to FIG. 20A. The stereo image computation unit 250 according to the present embodiment additionally includes a filter processor 25 and a layering unit 26. The filter processor 25 performs the convolutional computation on image data to generate a feature image and generate a feature image block. The layering unit 26 copies and layers two-dimensional intensity data 12, which has been converted by the signal conversion unit 22, to generate an intensity data block. The details of the above will be described later.

FIG. 20B is an example of a functional block diagram when functions of the information processing apparatus 30 are divided into blocks. Points different from those in FIG. 10 are mainly described with reference to FIG. 20B. The learning unit 42 includes a filter processor 25 and a layering unit 26. The learning unit 42 performs the same process as that of the distance measuring apparatus 100 during learning, and hence the functions may be similar to those in FIG. 20A.

In the first embodiment, the one-dimensional reflected signal 14 is converted into the two-dimensional intensity data 12 to match the number of dimensions with that of the image data, and associates the intensity data 12 with the image data such that the distances of at least one dimension are the distances in the same direction. However, regarding the vertical direction, the image data has the y coordinate and the intensity data has the z coordinate, and these coordinates belong to different dimensions. Thus, according to the second embodiment, the meaning of the data in the vertical direction of intensity data is further associated with that of image data.

When two axes of x and y of one data are associated with those of another data, the association is difficult unless the pieces of data are two-dimensional data. Hence, the dimensions are extended in the present embodiment. Specifically, the filter processor 25 performs convolutional computation using a number c of filters 88 on image data of x×y (it is assumed that data for R, data for G, and data for B are used, however, the format and the number of pieces of data are not limited). The filters 88 may be obtained through learning or defined in advance.

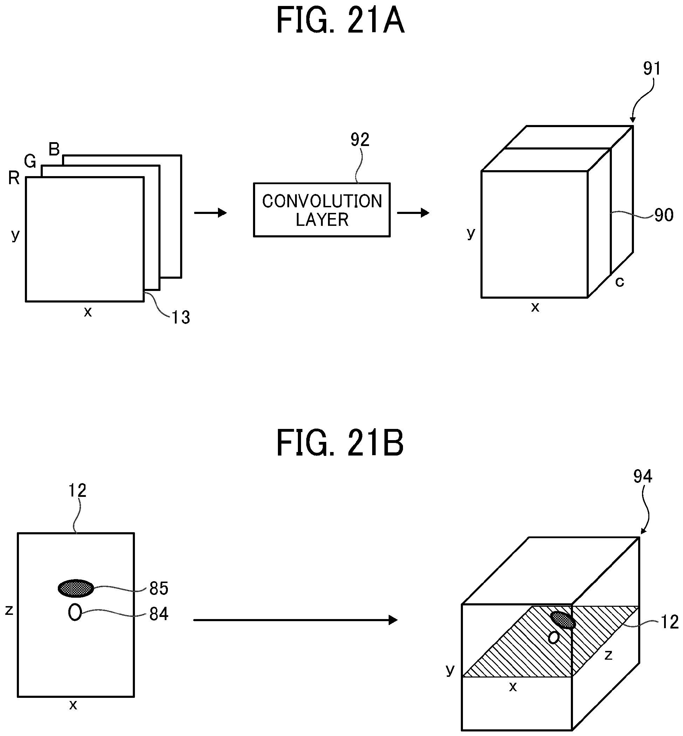

FIGs. 21A and 21B illustrate dimensional extension. Since the filter processor 25 convolutes the image data 13 of x×y using the number c of filters 88, a number c of feature images 90 are obtained. As illustrated in FIG. 21A, the number c of feature images 90 are converted into a feature image block 91 of x×y×c.

Then, regarding the intensity data 12, as illustrated in FIG. 21B, the layering unit 26 copies (duplicates) the intensity data 12 of x×z for a number y, and layers the number y of pieces of intensity data 12 of x×z in the vertical direction (y direction) to generate an intensity data block 94. Thus, the size of the intensity data block 94 is x×y×z.

When the height of the spotlight 86 is smaller than the height y of the image data 13, the regions below and above y of the spotlight 86 are unknown regions (regions not irradiated with the irradiation light of the LiDAR device). When the intensity data block 94 is generated, instead of merely copying the intensity data 12, all pixels included in the intensity data 12 having y values that are above and below the height of the spotlight 86 may be set to zero. Accordingly, an intensity data block 94 closer to the answer distance image than an intensity data block 94 obtained by copying can be generated.

As found through comparison between FIG. 21A and FIG. 21B, the feature image block 91 and the intensity data block 94 have been associated with each other such that the distances in the two dimensions of x and y represent the distances in the same direction. When intensity data 12 is generated by scanning in the vertical direction with laterally long spotlight, the intensity data 12 is of y×z, and hence the layering direction is the lateral direction (x direction). The value of z does not have to match the value of c.

In this way, the layering unit associates the lateral direction along the x-axis and the height direction along the z-axis of the two-dimensional intensity data respectively with the x-axis and the y-axis of the image data; and layers the two-dimensional intensity data such that the depth direction in which the number c of feature images are arranged in a superposed manner is associated with the z-axis of the two-dimensional intensity data.

As far as information for two dimensions are associated as the final result, a desirable process and a desirable parameter can be applied. Since the size of one block does not have to match the size of another block (x and x, y and y, and c and z), the number of strides may be set to two or more during convolutional computation on the image data 13 of RGB. The convolutional computation may be applied a plurality of times (for example, filters with different sizes may be used to apply convolution two times). Likewise, for the intensity data 12, the convolutional computation may be performed and then data may be layered in the y direction.

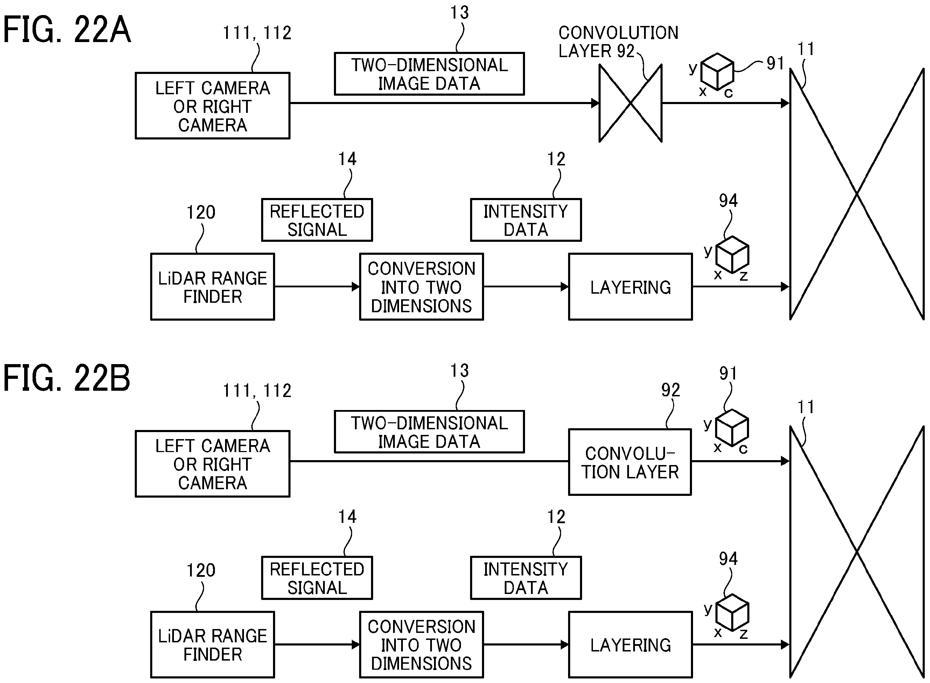

FIGs. 22A and 22B are each a diagram of a general arrangement of the distance measuring apparatus 100 or the information processing apparatus 30 that outputs a distance image from the feature image block 91 and the intensity data block 94. FIG. 22A illustrates a configuration example when a filter of the convolution layer 92 is also optimized by learning. The image data 13 captured by the left camera 111 or the right camera 112 is converted into a feature image block 91 by the convolution layer 92 (filter processor 25). The convolution layer 92 can be handled as a monolayer neural network as described above, and outputs image data (feature image block 91) of x×y×c in response to an input of image data 13 of x×y. The feature image block 91 of x×y×c is input to the input layer of the neural network 11.

In contrast, a reflected signal measured by the LiDAR range finder 120 is converted into intensity data 12 of x×y and layered to generate an intensity data block 94 of x×y×z. The intensity data of x×y×z is input to the input layer of the neural network 11.

During learning, the difference between the answer distance image obtained using the loss function and the output layer of the neural network 11 is propagated backward to the input layer of the neural network 11. The difference which has been propagated to the input layer is transferred to the convolution layer 92 to optimize the filter of the convolution layer 92.

Even when backpropagation occurs to the convolution layer 92, the depth direction (c direction) may not be arranged on a distance basis. However, although the depth direction (c direction) is not arranged on a distance basis, the precision of distance estimation may be improved. This point will be described in a third embodiment.

FIG. 22B illustrates a configuration example when the filter of the convolution layer 92 is prepared in advance. The image data 13 captured by the left camera 111 or the right camera 112 is converted into a feature image block 91 by the filter prepared in advance of the convolution layer 92. When image data of x×y is input, image data of x×y×c (feature image block 91) is output. The feature image block 91 of x×y×c is input to the input layer of the neural network 11. The flow of a signal of the LiDAR range finder 120 is similar to that in FIG. 22A.

During learning, the difference between the answer distance image obtained using the loss function and the output layer of the neural network 11 is propagated backward to the input layer of the neural network 11.

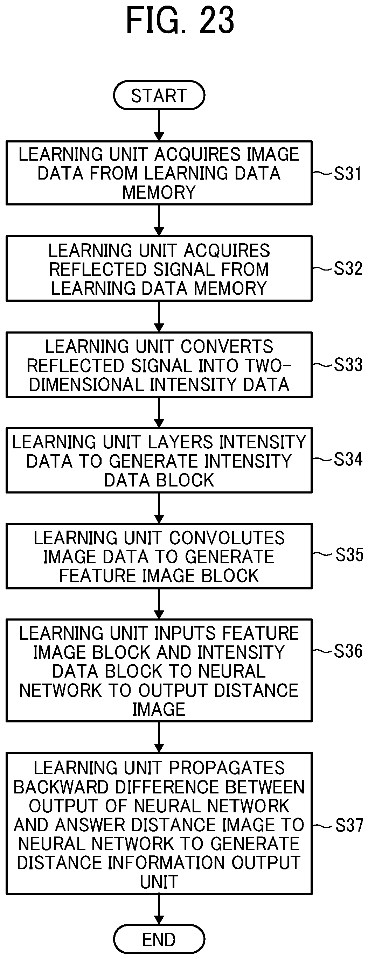

FIG. 23 is an example of a flowchart describing a procedure of the information processing apparatus 30 to generate the distance information output unit 24.

The learning unit 42 acquires image data from the learning data memory 43 (S31). The learning unit 42 acquires a reflected signal from the learning data memory 43 (S32).

The signal conversion unit 22 of the learning unit 42 converts a number x of reflected signals into two-dimensional intensity data 12 (S33). That is, one-dimensional reflected signals are arranged in the z direction for each x coordinate.

The layering unit 26 of the learning unit 42 layers intensity data in the y direction to generate an intensity data block 94 (S34).

The filter processor 25 of the learning unit 42 convolutes image data to generate a feature image block 91 (S35).

The distance information output unit 24 of the learning unit 42 inputs the feature image block 91 and the intensity data block 94 to the neural network to output a distance image (S36).

The learning unit 42 propagates backward the difference between the output of the neural network 11 and the answer distance image to the neural network 11, to generate the distance information output unit 24 (S37). With the configuration in FIG. 22A, a filter coefficient of the convolution layer 92 is also learned. The flowchart in FIG. 23 provides one-time updating; however, actually, updating is repeatedly performed on learning data.

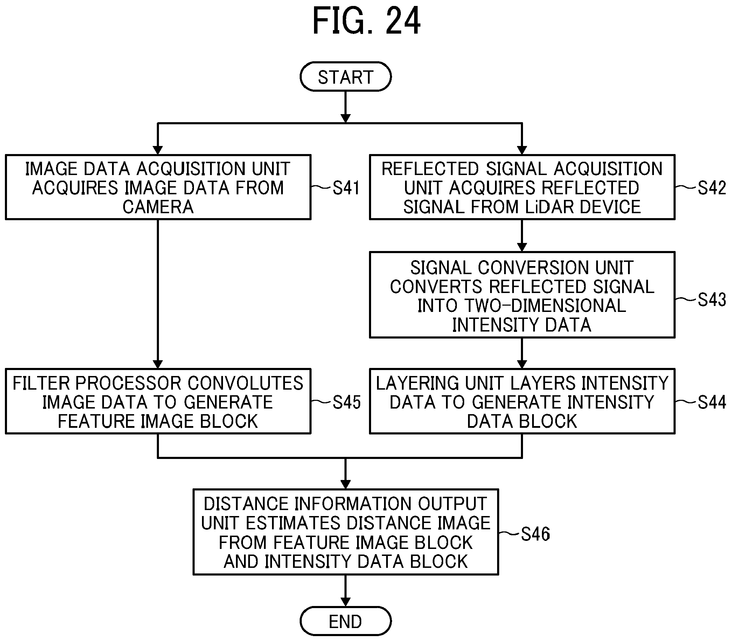

FIG. 24 is an example of a flowchart describing a procedure of the distance measuring apparatus 100 according to the present embodiment to generate a distance image. The process in FIG. 24 is repeatedly executed when the distance measuring apparatus 100 generates a distance image.

The image data acquisition unit 21 acquires image data from the left camera 111 or the right camera 112 (S41). The reflected signal acquisition unit 23 acquires a reflected signal from the LiDAR range finder 120 (S42). Although steps S41 and S42 are desirably executed in parallel, the reflected signal acquisition unit 23 acquires a number x of reflected signals acquired because scanning with vertically long spotlight is provided a number x of times in the x direction while the image data acquisition unit 21 acquires one image data.

The signal conversion unit 22 converts the number x of reflected signals into two-dimensional intensity data 12 (S43). That is, one-dimensional reflected signals are arranged in the z direction for each x coordinate.

The layering unit 26 layers intensity data to generate an intensity data block 94 (S44). The filter processor 25 convolutes image data to generate a feature image block 91 (S45). The filter processor 25 may be obtained through machine learning.

The distance information output unit 24 obtained through machine learning estimates a distance image from the feature image block 91 and the intensity data block 94 (S46).

As described above, since the feature image block 91 is generated from the image data and the intensity data block 94 is generated from the intensity data, the image data and the intensity data can be associated with each other such that the distances in the directions along the x- and y-axes of the image data and the intensity data represent the distances in the same directions. Since the correspondence for the two axes of the x- and y-axes is ensured, in addition to the above-described advantageous effect, the correspondence further contributes to an increase in convergence rate and an improvement in learning probability.

In the present embodiment, combination of signals in two different formats has been described. However, the number of signals is not limited as far as the numbers of dimensions of two pieces of data match each other and in which directions the two dimensions indicate the distances match each other by the above-described method. For example, the image captured by the left camera 111 or the right camera 112, the reflected signal obtained by the LiDAR range finder 120, and sound data can be combined.

In a third embodiment, a loss function is designed to associate the c direction of the feature image block 91 with the z direction of the intensity data block 94. Also, the number c of filters in a depth direction of the feature image block 91 of the camera and the distance in the z direction of the intensity data block 94 are associated with each other such that the number c of filters of the feature image block 91 represents the intensity data block 94. Accordingly, three dimensions of x, y, and z can be associated with one another.

Since the correspondence of the three dimensions of x, y, and z is ensured, the correspondence further contributes to an increase in convergence rate of learning and an improvement in learning probability.

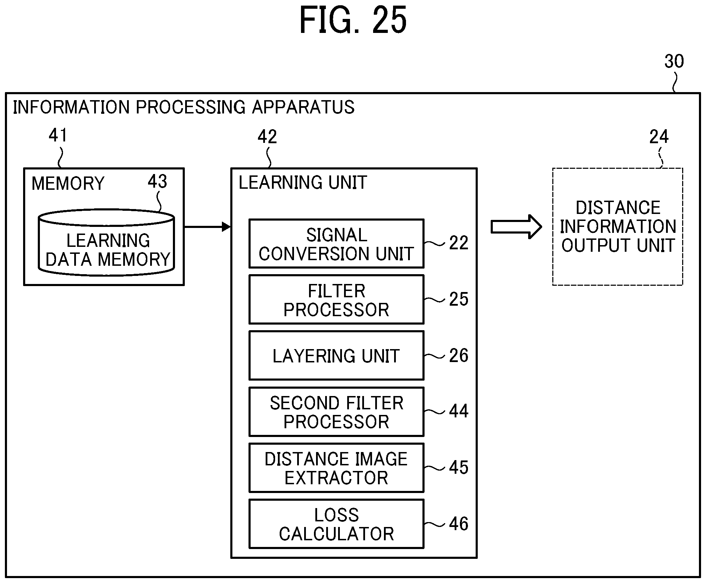

FIG. 25 is an example of a functional block diagram when functions of the information processing apparatus 30 are divided into blocks. The functions of the distance measuring apparatus 100 are described below also with reference to the functional block diagram illustrated in FIG. 20A. That is, the configuration after learning is the same, and the scheme of learning is different.

Points different from those in FIG. 20B are mainly described with reference to FIG. 25. The learning unit 42 includes a second filter processor 44, a distance image extractor 45, and a loss calculator 46. The second filter processor 44 includes a filter on a distance basis, and applies a filter to the feature image block 91 to extract a feature image on a distance basis. The distance image extractor 45 extracts an answer distance image on a distance basis from the answer distance image. The loss calculator 46 calculates a loss for associating the c direction of the feature image block 91 with the z direction of the intensity data block 94.

In the second embodiment, the signals in two different formats whose dimensions in the vertical direction representing distances do not match each other without conversion of two-dimensional data are converted such that dimensions in the vertical direction representing distances match each other using convolutional computation and layering in the y direction. Although a three-dimensional block has been generated in the second embodiment, information in the depth direction of the block is c, which is the number of feature images of the feature image block 91, whereas information in the depth direction of the block is z, which is a distance of the intensity data block 94. Mismatch of information occurs. Thus, in the third embodiment, information represented by the depth directions of two blocks is also associated with the distance in the depth direction.

As described in the mechanism of machine learning, the neural network 11 learns a parameter to decrease the difference between the output result and the training data. Using this scheme, in the present embodiment, a loss function is designed such that respective feature images 90 of the feature image block 91 are arrayed from a short distance to a long distance (as a result of learning, respective feature images are arranged from a short distance to a long distance).

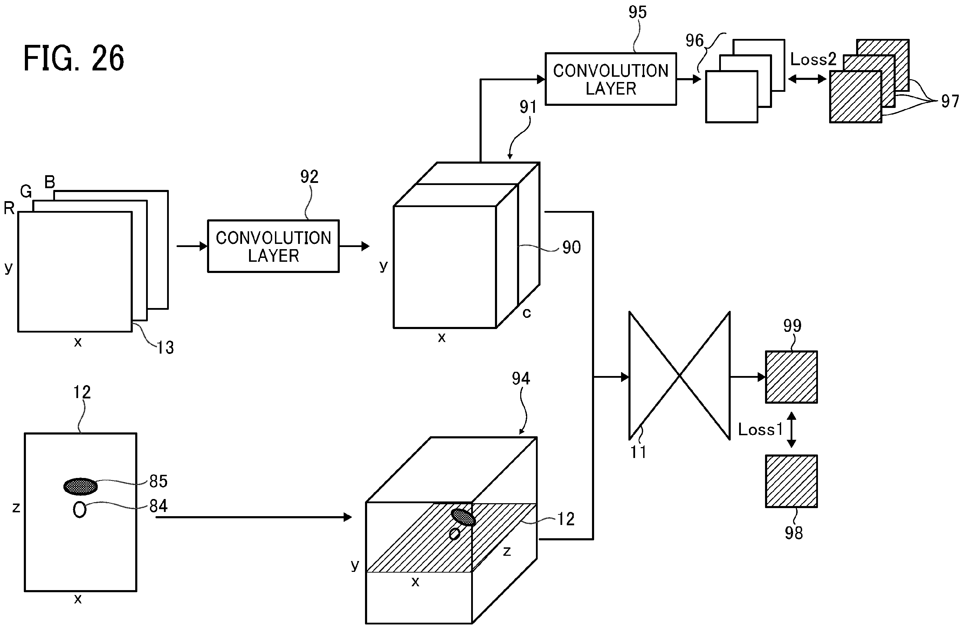

FIG. 26 schematically illustrates a method of designing a loss function. As illustrated in FIG. 26, a convolution layer 95 (corresponding to the second filter processor 44) convolutes the feature image block 91. The convolution layer 95 includes filters by the amount of distance. For example, when the measurable range is from 1 to 100 [m] and a distance is measured with a resolution of 1 [m], 100 kinds of filters are provided. The filters may each have any initial value which is properly learned if required.

When the convolution layer 95 performs convolutional computation, a group of feature images 96 by the amount of distance which is the number of filters is generated. Since the answer distance image has been prepared in advance, the distance image extractor 45 divides the answer distance image to have the same distance as the feature image to generate an answer distance image 97 on a distance basis. The distance image extractor 45 generates, for example,

an answer distance image 97 on a distance basis with pixels having a distance value of 1 [m] left,

an answer distance image 97 on a distance basis with pixels having a distance value of 2 [m] left,

..., and

an answer distance image 97 on a distance basis with pixels having a distance value of 100 [m] left.

Generating such an answer distance image on a distance basis is to simplify the description. The distance image extractor 45 may extract pixels having a distance of 1 [m], 2 [m], ..., and 100 [m].

Then, the loss calculator 46 calculates the difference between each feature image 96 and the answer distance image 97 on a distance basis corresponding to the feature image 96. The difference is referred to as Loss2 (an example of a second difference). Hence, Loss2 is the sum obtained by adding

the sum of square of the difference on a pixel basis between the feature image 96 generated using the filter corresponding to 1 [m] and the answer distance image 97 on a distance basis divided to 1 [m],

the sum of square of the difference on a pixel basis between the feature image 96 generated using the filter corresponding to 2 [m] and the answer distance image 97 on a distance basis divided to 2 [m],

..., and

the sum of square of the difference on a pixel between the feature image 96 generated using the filter corresponding to 100 [m] and the answer distance image 97 on a distance basis divided to 100 [m].

The method of calculating Loss2 is not limited to the method as far as the difference between the corresponding positions in two images can be calculated. For example, as a Loss function, L1 norm or L2 norm may be used.

Like the second embodiment, the difference between the distance image 99 that is output from the neural network 11 and the answer distance image 98 is obtained. The difference is referred to as Loss1 (an example of a first difference).

The loss calculator 46 combines Loss1 and Loss2 using, for example, the weighted sum to calculate the difference Loss_all of the entire neural network.

$$Loss\_all = \alpha Loss1 + \beta Loss2,$$

where $\alpha$ and $\beta$ are weighting coefficients of Loss1 and Loss2. Alternatively, Loss_all may be a fixed value which is obtained through learning.

The learning unit 42 performs learning to minimize Loss_all. Conditions to decrease Loss all are that the distance image estimated by the distance information output unit 24 (neural network 11) becomes close to the answer and that respective feature images arranged from the near side toward the far side of the feature image block 91 are arranged to be directed from the short distance to the long distance. The condition to arrange respective feature images to be directed from the short distance to the long distance represents that the depth direction (the number c of filters) of the feature image block 91 and the depth direction z of the intensity data block 94 represent distances in the same depth direction.

The number of filters of the second filter processor 44 may correspond to, for example, predetermined ranges such as numerals corresponding to 0 to 20 [m], 21 to 40 [m], 41 to 60 [m], 61 to 80 [m], and 81 to 100 [m] (in this case, the filters for learning Loss2 are five kinds of filters).

For the second filter processor 44, the filters by the amount of distance have been prepared; however, the second filter processor 44 may be omitted. As illustrated in FIG. 26, the convolution layer 92 arrays the respective feature images, which are arranged from the near side toward the far side of the feature image block 91, to be directed from the short distance to the long distance. Thus, in the present embodiment, learning of the filters of the convolution layer 92 is required. Also when the convolution layer 95 is provided, the convolution layer 95 may be filters that acquire respective feature images from the near side toward the far side of the feature image block 91. In the present embodiment, the distance image extractor 45 is prepared, however, this module may be omitted. In this case, when Loss2 is calculated, a conditional statement for extracting a proper distance may be alternatively used. In this case, the convolution layer 95 does not have to separate an image into images on a distance basis, and hence the module is not required.

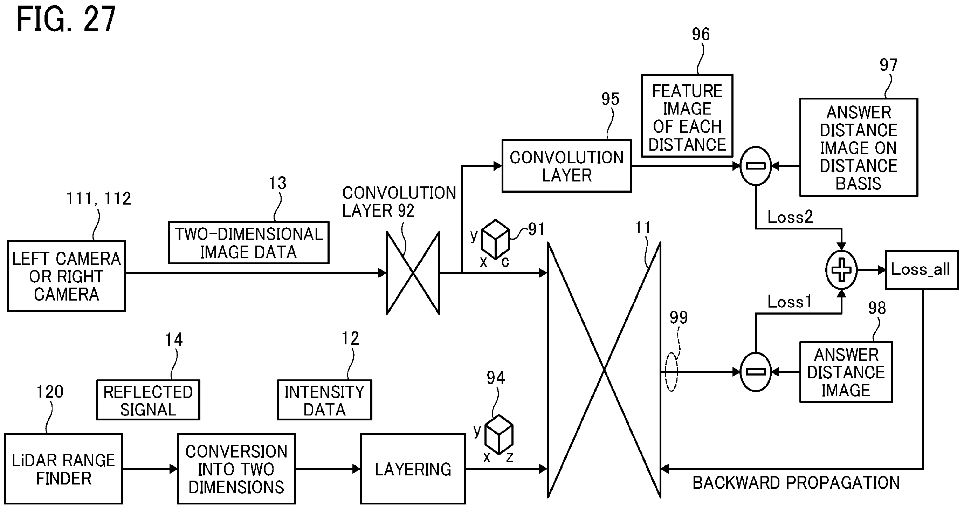

FIG. 27 is a diagram of a general arrangement of the information processing apparatus 30 that outputs a distance image from the feature image block 91 and the intensity data block 94. FIG. 27 illustrates a configuration during learning. The process until the feature image block 91 is generated may be similar to that in FIG. 22A. The feature image block 91 is input to the neural network 11 and also input to the convolution layer 95.

The convolution layer 95 has a filter on a distance basis, and outputs a feature image 96 of each distance. The difference (Loss2) between the feature image 96 of each distance and the answer distance image 97 on a distance basis is calculated. As described in the first embodiment, when it is assumed that the loss function of the regression model is a square loss, calculation is made as $\delta_j^{(L)} = z_j - d_j$. Based on this, it is assumed that Loss2 is the sum of $\delta_j^{(L)}$ of respective distance images. Since j of $\delta_j^{(L)}$ represents a pixel, the loss calculator 46 sums up the difference between the feature image 96 of each distance and the answer distance image 97 of the distance on a distance basis.

Like the second embodiment, the difference (Loss1) between the output of the neural network 11 to which the feature image block 91 and the intensity data block 94 have been input, and the answer distance image is calculated. Loss1 may be $\delta_j^{(L)} = z_j - d_j$.

Loss_all is the weighted sum of Loss1 expressed by $\delta_j^{(L)}$ and Loss2 obtained by adding the difference between the feature image 96 and the answer distance image 97 of the pixel corresponding to j of Loss1, for all distances.

Loss all calculated in this way is propagated backward from the output layer 33 to the input layer 31 and the convolution layer 92. In the second embodiment, x and y are aligned between the feature image block and the intensity data block; however, the meanings of the depth direction c and the z-axis are not aligned. In the present embodiment, the depth direction (c direction) of the number c of feature images represents the distance indicated by the z-axis of the intensity data block 94.

Also for the convolution layer 95, the coefficient of the filter can be updated by propagating Loss2 backward.

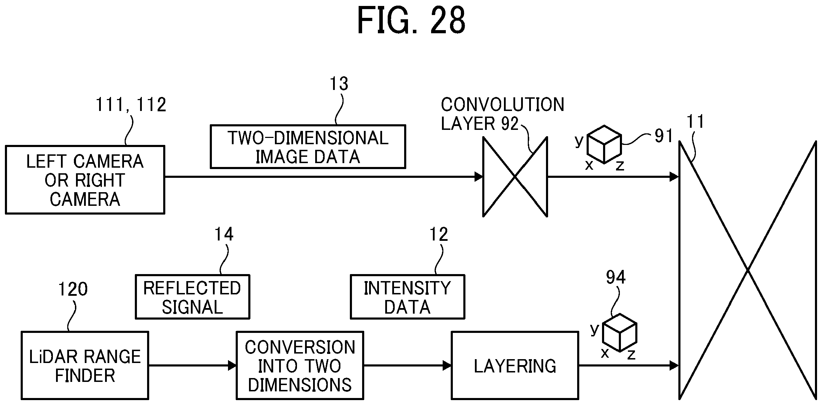

FIG. 28 is a diagram of a general arrangement of the distance measuring apparatus 100 that outputs a distance image from the feature image block 91 and the intensity data block 94. The general arrangement is similar to that in FIG. 22A. When learning of the neural network has been completed, the convolution layer 95 is no longer required. Hence, there is no configuration relating to Loss2 compared with FIG. 27.

Moreover, while the feature image block 91 has dimensions of x×y×c in FIG. 22A, the feature image block 91 has dimensions of x×y×z through learning in FIG. 28. In this way, in the present embodiment, a loss function is designed to provide association such that the depth direction (c direction) of the feature image block 91 and the depth direction (z direction) of the intensity data block 94 indicate the distances in the same depth direction.

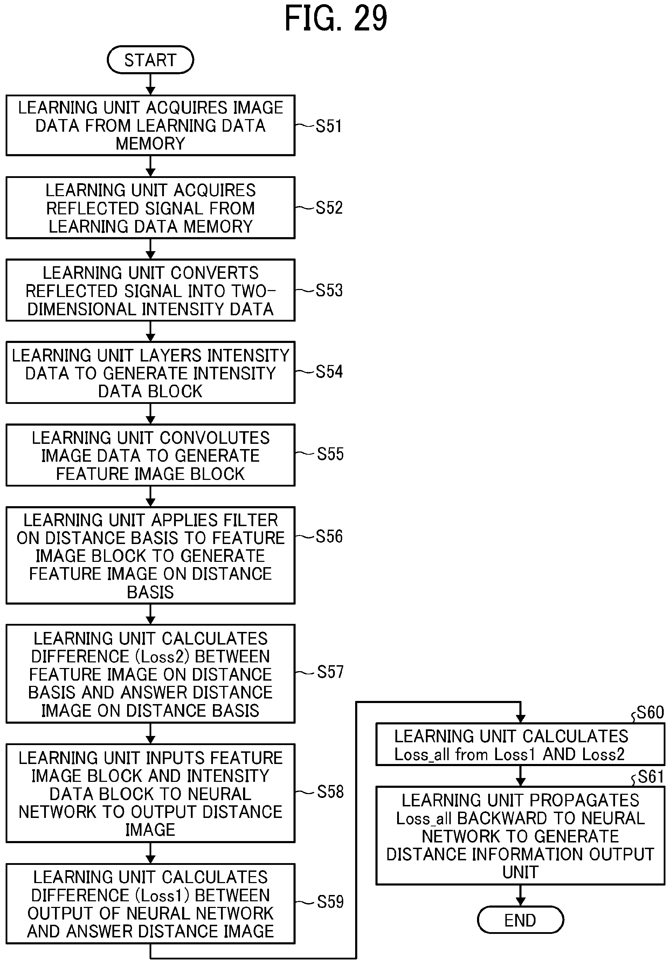

FIG. 29 is an example of a flowchart describing a procedure of the information processing apparatus 30 to generate the distance information output unit 24.

The learning unit 42 acquires image data from the learning data memory 43 (S51). The learning unit 42 acquires a reflected signal from the learning data memory 43 (S52).

The signal conversion unit of the learning unit 42 converts a number x of reflected signals into two-dimensional intensity data 12 (S53). That is, one-dimensional reflected signals are arranged in the z direction for each x coordinate.

The layering unit 26 of the learning unit 42 layers intensity data in the y direction to generate an intensity data block 94 (S54).

The filter processor 25 of the learning unit 42 convolutes image data to generate a feature image block 91 (S55).

The second filter processor 44 of the learning unit 42 applies a filter on a distance basis to the feature image block 91 to generate a feature image 96 on a distance basis (S56). The distance image extractor 45 of the learning unit 42 extracts an answer distance image 97 on a distance basis from the answer distance image.

The loss calculator 46 of the learning unit 42 calculates the difference (Loss2) between the feature image 96 of each distance and the answer distance image 97 of the distance on a distance basis (S57).

The distance information output unit 24 of the learning unit 42 inputs the feature image block 91 and the intensity data block 94 to the neural network 11 to output a distance image (S58).

The learning unit 42 calculates the difference (Loss1) between the output of the neural network 11 and the answer distance image (S59).

The loss calculator 46 of the learning unit 42 calculates Loss_all from Loss1 and Loss2 (S60).

The learning unit 42 propagates Loss_all backward to the neural network 11 to generate the distance information output unit 24 (S61). The flowchart in FIG. 29 provides one-time updating; however, actually, updating is repeatedly performed on learning data.

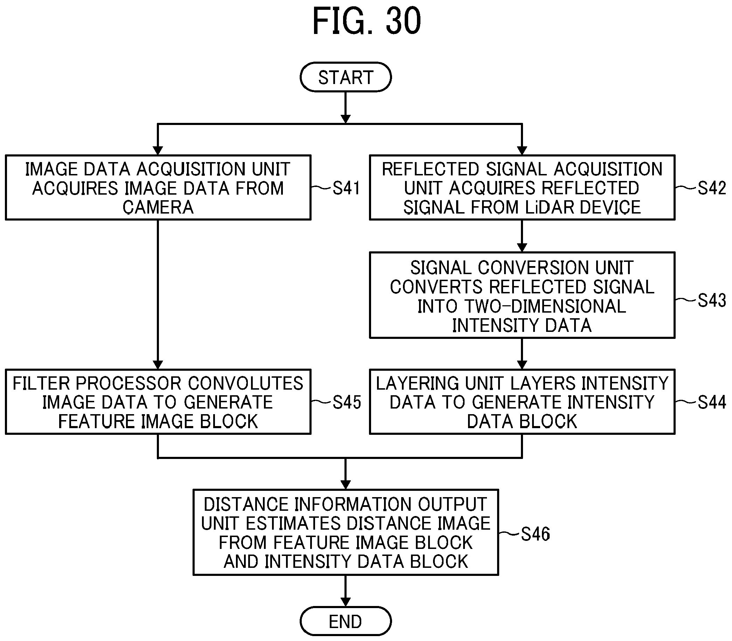

FIG. 30 is an example of a flowchart describing a procedure of the distance measuring apparatus 100 according to the present embodiment to generate a distance image. The procedure of the process in FIG. 30 is similar to that in FIG. 24.

With the present embodiment, the loss function (Loss_all) is designed such that the c direction of the feature image block 91 and the z direction of the intensity data block 94 represent the distances in the same depth direction, and association is provided such that the number c of filters in the depth direction of the feature image block 91 and the z-axis of the intensity data block 94 represent the distances in the same direction. Accordingly, the x-, y-, and z-axes of the feature image block 91 can be associated with those of the intensity data block 94. Since the correspondence is ensured in the three dimensions of x, y, and z, the correspondence further contributes to an increase in convergence rate of learning and an improvement in learning probability.

In a fourth embodiment, an example of combining signals in different formats is described based on a combination other than the combination of the left camera 111 or the right camera 112 and the LiDAR range finder 120.

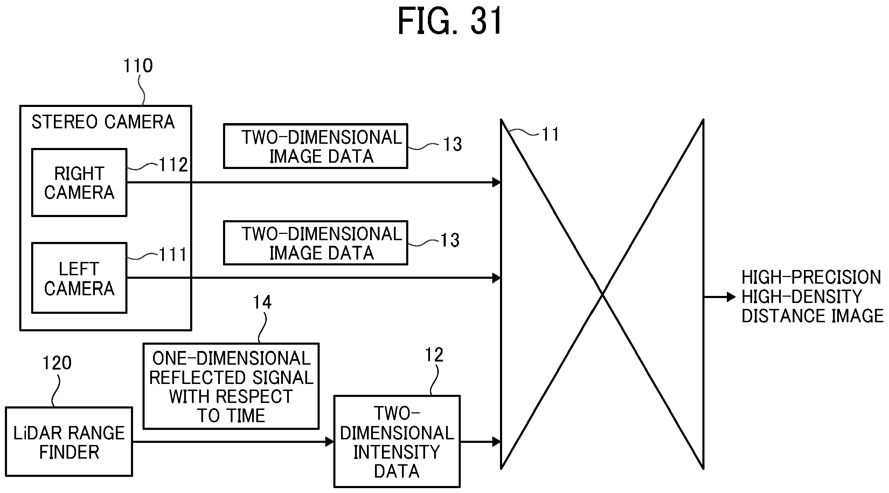

FIG. 31 illustrates an example of a configuration of a distance measuring apparatus that measures a distance by a combination of the stereo camera 110 and the LiDAR range finder 120. As illustrated in FIG. 31, the stereo camera 110 may be used as a camera. However, a single-lens camera is more advantageous in terms of cost and space.

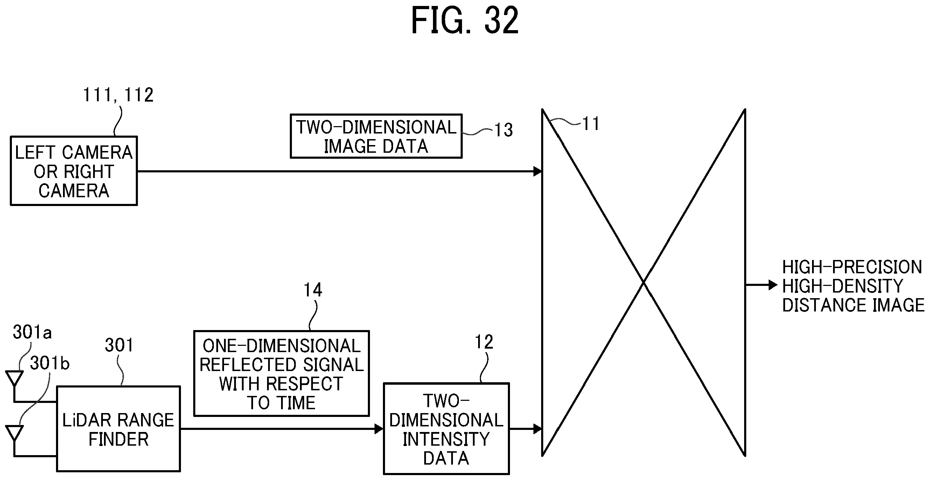

FIG. 32 illustrates an example of a configuration of a distance measuring apparatus that measures a distance by a combination of the left camera 111 or the right camera 112 and a radar 301. The radar 301 transmits a transmission wave such as a millimeter-wave from a transmission antenna 301a, combines a reflected wave received by a reception antenna 301b with the transmission wave, and measures the distance to a reflection object and the direction of the reflection object through waveform analysis. In the present embodiment, signals in different formats of the waveform of the combined waves and the image captured by the camera can be combined. With the configuration in FIG. 32, robust distance measurement for a long distance can be performed based on the principle of distance measurement with the radar 301.

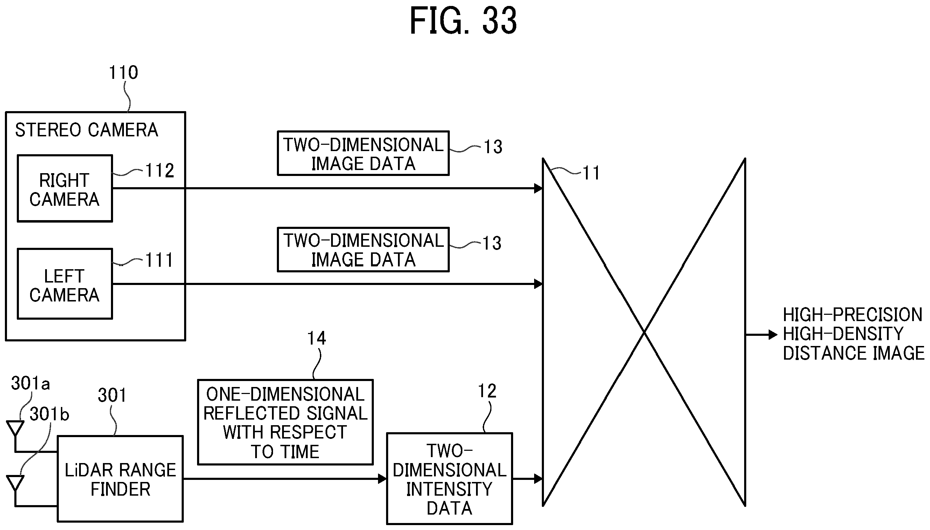

FIG. 33 illustrates an example of a configuration of a distance measuring apparatus that measures a distance by a combination of the stereo camera 110 and the radar 301. As illustrated in FIG. 33, the stereo camera 110 may be used as a camera.

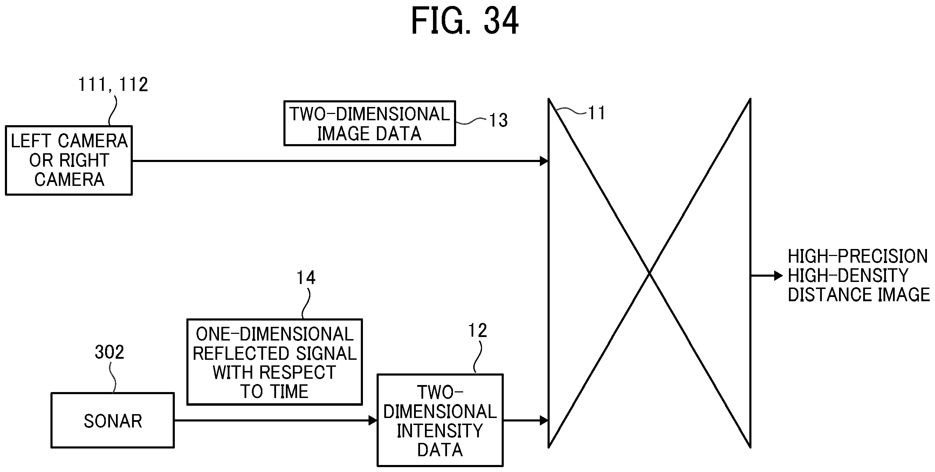

FIG. 34 illustrates an example of a configuration of a distance measuring apparatus that measures a distance by a combination of the left camera 111 or the right camera 112 and a sonar 302. The sonar 302 radiates an ultrasonic wave from a transducer, receives a reflected wave by a microphone, and measures the distance to a reflection object through waveform analysis of the reflected wave. With the configuration in FIG. 34, a distance measuring apparatus can be provided at low cost with a small housing.

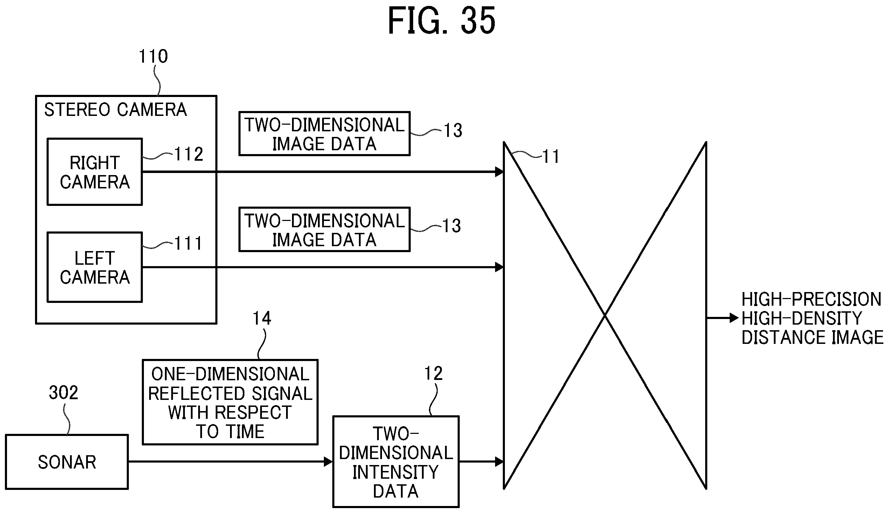

FIG. 35 illustrates an example of a configuration of a distance measuring apparatus that measures a distance by a combination of the stereo camera 110 and the sonar 302. As illustrated in FIG. 35, the stereo camera 110 may be used as a camera.

In the present embodiment, a case where the distance measuring apparatus 100 is mounted on a vehicle is described.

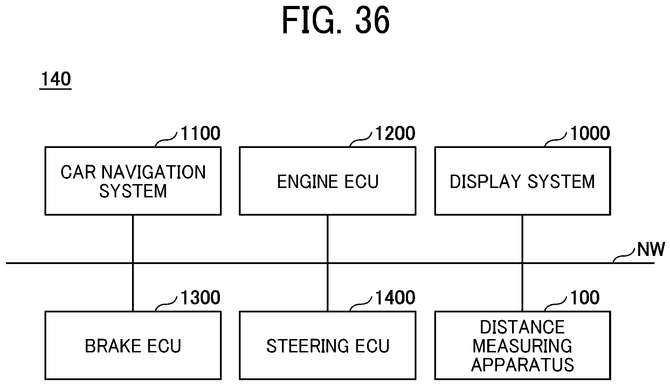

FIG. 36 illustrates an example of a configuration of a vehicle 140 in which the distance measuring apparatus 100 is installed. The vehicle 140 includes a car navigation system 1100 that makes communication via an on-vehicle network NW such as a controller area network (CAN) bus, an engine electronic control unit (ECU) 1200, a display system 1000, a brake ECU 1300, a steering ECU 1400, and the distance measuring apparatus 100.

The car navigation system 1100 includes a global navigation satellite system (GNSS) represented by a global positioning system (GPS) to detect the current location of the vehicle 140 and display the position of the vehicle 140 on an electronic chart. Moreover, the car navigation system 1100 receives inputs of the departure position and the destination, searches for a route from the departure position to the destination, displays the route on the electronic chart, and provides a guidance about the traveling direction with voice, characters (indicated on the display), animation, or the like to an occupant of the vehicle 140 before the traveling path is changed. The car navigation system 1100 may communicate with a server via, for example, a mobile phone network. In this case, the server can transmit the electronic chart to the vehicle 140 or search for a route.

The engine ECU 1200 determines an ideal amount of fuel injection, controls advancement or retardation of an ignition timing, and controls a movable valve mechanism, in accordance with information from each sensor and the state of the vehicle 140. Moreover, the engine ECU 1200 determines necessity of a change in speed with reference to a map that determines shift lines of speed change with respect to the relationship between the current vehicle speed and the opening degree of the accelerator. The engine ECU 1200 controls acceleration and deceleration during tracking travel to the preceding vehicle by combining the above-described operations. Note that an electric motor may be used as the power together with the engine or instead of the engine.

The brake ECU 1300 performs control on an antilock braking system (ABS), control on braking during tracking travel to the preceding vehicle, automatic braking based on a time to collision (TTC) with respect to an obstacle, and control on keeping a stop state when the vehicle starts traveling on a slope. The brake ECU 1300 controls the braking force of each wheel of the vehicle 140 even though the occupant of the vehicle 140 does not operate the brake pedal.

The steering ECU 1400 detects the direction and amount of steering of the steering wheel by the occupant of the vehicle 140, and performs power steering control of adding a steering torque in the steering direction. Moreover, the steering ECU 1400 steers the vehicle in a direction to avoid deviation of the vehicle 140 from the travel lane, in a direction to keep travel at the center position of the travel lane, or in a direction to avoid an approach to an obstacle, even though the occupant of the vehicle 140 does not operate the steering wheel.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure. Any one of the above-described operations may be performed in various other ways, for example, in an order different from the one described above.

In the above-described embodiment, the stereo camera 110 and the LiDAR range finder 120 are integrally configured. However, the stereo camera 110 and the LiDAR range finder 120 may be configured separately.

In the embodiment as described above, each of the stereo image computation unit 250 and the laser signal processor 240 is configured by a dedicated integrated circuit. However, for example, a recording medium storing the program codes of software that implements the functions of the stereo image computation unit 250 and the laser signal processor 240 may be provided for an information processing apparatus to implement the functions of the stereo image computation unit 250 and the laser signal processor 240.

The example configuration like one illustrated in FIG. 7 is divided into blocks according to main functions for easier understanding of the processes by the distance measuring apparatus 100. No limitation is intended by how the processes are divided or by the name of the processes. The processes of the distance measuring apparatus 100 can be divided into more processes in accordance with the contents of the processes. Further, one process can be divided to include a larger number of processes.

Each of the functions of the described embodiments can be implemented by one or more processing circuits or circuitry. Processing circuitry described in the specification includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions.

In the embodiment as described above, cases in which the distance measuring apparatus 100 is installed in the vehicle 140 are described. However, the distance measuring apparatus 100 may be installed, for example, in a motorbike, a bicycle, a wheelchair, and an agricultural cultivator without limited to the vehicle 140. Alternatively, the distance measuring apparatus 100 may be installed in a mobile object such as an autonomous mobile robot. Still alternatively, the distance measuring apparatus 100 may be installed in a flying object such as a drone. Yet alternatively, the distance measuring apparatus 100 may be installed in an industrial robot or the like installed in a secured manner for factory automation (FA).

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

## Claims

1. A distance measuring apparatus (100) configured to measure a distance to an object based on a plurality of signals in different formats, the distance measuring apparatus (100) comprising:

   a signal conversion unit (22) configured to match a format of a second signal relating to a distance to an object with a format of a first signal relating to an image; and
   a distance information output unit (24) configured to output distance information based on the first signal and the second signal having the format matched with the format of the first signal by the signal conversion unit (22), wherein the signal conversion unit (22) converts the second signal such that, among length information in directions of a plurality of dimensions held in the first signal and length information in directions of a plurality of dimensions held in the second signal having the format matched with the format of the first signal, length information in a direction of at least one of the plurality of dimensions of the first signal represents length information in a direction of at least one of the plurality of dimensions of the second signal.

2. The distance measuring apparatus (100) according to Claim 1, wherein
   the first signal is image data,
   the second signal is one-dimensional data representing the distance to the object, and
   the signal conversion unit (22) matches a number of dimensions of the second signal having one dimension with a number of dimensions of the first signal having two dimensions.

3. The distance measuring apparatus (100) according to Claim 2, wherein the signal conversion unit (22) associates the distance to the object held by the second signal having the one dimension with a height direction of the two dimensions and associates a scanning position when the object is horizontally scanned with a lateral direction of the two dimensions, and arranges an intensity of the second signal in association with the height direction and the lateral direction.

**4.** The distance measuring apparatus (100) according to Claim 3, wherein the signal conversion unit (22) converts the second signal to satisfy at least one of a condition that an x-axis of the image data and the lateral direction of the second signal converted into the two dimensions represent length information in a horizontal direction, and a condition that a y-axis of the image data and a vertical direction of the second signal converted into the two dimensions represent length information in the height direction.

**5.** The distance measuring apparatus (100) according to any one of Claims 1 to 4, wherein
the distance information output unit (24)

has a parameter that associates the first signal and the second signal having the format matched with the format of the first signal by the signal conversion unit (22) with distance information prepared in advance, and
when the first signal and the second signal having the format matched with the format of the first signal by the signal conversion unit (22) are input, outputs the distance information based on the parameter.

**6.** The distance measuring apparatus (100) according to Claim 5, wherein
the parameter is generated through deep learning, and
the distance information output unit (24) converts two-dimensional image data having a lateral direction along an x-axis and a height direction along a y-axis and intensity data of the second signal converted into two dimensions having a lateral direction along an x-axis or a z-axis and a height direction along a z-axis or a y-axis, into distance information.

**7.** The distance measuring apparatus (100) according to Claim 6, comprising:

a filter processor (25) configured to generate a number c of feature images each having a feature extracted through filtering on the image data; and
a layering unit (26) configured to

associate the lateral direction of the two-dimensional intensity data converted into the two dimensions by the signal conversion unit (22) and having the lateral direction along the x-axis and the height direction along the z-axis, with the x-axis of the image data and associates the height direction of the two-dimensional intensity data with the y-axis of the image data, and
layer the two-dimensional intensity data such that a depth direction in which the number c of feature images are arranged in a superposed manner corresponds to the z-axis of the two-dimensional intensity data.

**8.** The distance measuring apparatus (100) according to Claim 7, wherein
the distance information output unit (24)

has a parameter that associates a feature image in which a number c of pieces of two-dimensional image data having a lateral direction along an x-axis and a height direction along a y-axis are arranged in a depth direction, and intensity data having a lateral direction along an x-axis, a height direction along a y-axis, and a depth direction along a z-axis, with distance information prepared in advance, and
when a feature image in which a number c of pieces of two-dimensional image data having a lateral direction along an x-axis and a height direction along a y-axis are arranged in a depth direction and intensity data having a lateral direction along an x-axis, a height direction along a y-axis, and a depth direction along a z-axis are input, outputs the distance information based on the parameter.

**9.** The distance measuring apparatus (100) according to Claim 7, wherein
the distance information output unit (24)

has a parameter that associates the image data and intensity data having a lateral direction along an x-axis, a height direction along a y-axis, and a depth direction along a z-axis, with distance information prepared in advance, and
when the image data and intensity data having a lateral direction along an x-axis, a height direction along a y-axis, and a depth direction along a z-axis are input, outputs the distance information based on the parameter.

**10.** The distance measuring apparatus (100) according to Claim 7, wherein
the distance information output unit (24)
has a parameter that associates the image data and intensity data having a lateral direction along an x-axis, a height direction along a y-axis, and a depth direction along a z-axis, with distance information prepared in advance, and the parameter is learned through machine learning based on a weighted sum of

a first difference between distance information prepared in advance and the distance information output based on the parameter in response to inputs of the image data and intensity data having a lateral direction along an x-axis, a height direction along a y-axis, and a depth direction along a z-axis, and

a second difference between a feature image that is obtained by extracting the number c of feature images on a distance basis and distance information that is extracted from distance information prepared in advance, on a distance basis corresponding to the distance when the feature image is extracted.

11. The distance measuring apparatus (100) according to Claim 10, wherein
the parameter is generated through deep learning, and
when a feature image block in which a number c of feature images each having a lateral direction along an x-axis and a height direction along a y-axis are arranged in a depth direction, and an intensity data block having a lateral direction along an x-axis, a height direction along a y-axis, and a depth direction along a z-axis are input to the distance information output unit (24),
the depth direction of the feature image block is associated with a distance in the depth direction indicated by the z-axis of the intensity data block.

12. A method for measuring a distance to an object based on a plurality of signals in different formats, the method comprising:

matching (S23) a format of a second signal relating to a distance to an object with a format of a first signal relating to an image; and

outputting (S24) distance information based on the first signal and the second signal having the format matched with the format of the first signal by the matching (S23),

wherein, in the matching (S23), the second signal is converted such that, among length information in directions of a plurality of dimensions held in the first signal and length information in directions of a plurality of dimensions held in the second signal having the format matched with the format of the first signal, length information in a direction of at least one of the plurality of dimensions of the first signal represents length information in a direction of at least one of the plurality of dimensions of the second signal.

13. An on-vehicle apparatus that sends the converted length information from the distance measuring apparatus according to any one of Claims 1 to 11 to a control unit of a mobile object.

14. A mobile object comprising the on-vehicle apparatus according to Claim 13.

# FIG. 1

# FIG. 2

# FIG. 3

120

LiDAR RANGE FINDER

DISTANCE
INFORMATION OF
EACH IRRADIATION
DIRECTION

PROCESSING RANGE

112

RIGHT
CAMERA

110

STEREO CAMERA

190

ECU

LEFT
CAMERA

111

FIG. 4

100

110

112

201
211
212
213

221
222
223

SYNCHRONOUS CONTROL SIGNAL

REFERENCE IMAGE

120
121

232
231

233
234

235
236

REFLECTED SIGNAL

LASER SIGNAL PROCESSOR

240

RAW SIGNAL

SYNCHRONOUS CONTROL SIGNAL

COMPARISON IMAGE

111

STEREO IMAGE COMPUTATION UNIT (FPGA)

250

MEMORY

260

MPU

270

202

FIG. 5

EP 3 764 124 A1

FIG. 6

INTENSITY

81

82

TIME∝DISTANCE

FIG. 7

13 — TWO-DIMENSIONAL IMAGE DATA

14 — ONE-DIMENSIONAL REFLECTED SIGNAL WITH RESPECT TO TIME

111,112 — LEFT CAMERA OR RIGHT CAMERA

120 — LiDAR RANGE FINDER

250 — STEREO IMAGE COMPUTATION UNIT

21 — IMAGE DATA ACQUISITION UNIT

22 — SIGNAL CONVERSION UNIT

23 — REFLECTED SIGNAL ACQUISITION UNIT

24 — DISTANCE INFORMATION OUTPUT UNIT

HIGH-PRECISION HIGH-DENSITY DISTANCE IMAGE

## FIG. 8

## FIG. 9

CPU 501 · ROM 502 · RAM 503 · HDD CONTROLLER 505 · HD 504 · DISPLAY 506 · EXTERNAL DEVICE CONNECTION I/F 508 · 510 · NETWORK I/F 509 · KEYBOARD 511 · POINTING DEVICE 512 · DVD-RW DRIVE 514 · 513 · MEDIA I/F 516 · MEDIA 515

# FIG. 10

INFORMATION PROCESSING APPARATUS

30

41
MEMORY 43

LEARNING
DATA MEMORY

42
LEARNING UNIT 22

SIGNAL
CONVERSION UNIT

24
DISTANCE
INFORMATION
OUTPUT UNIT

# FIG. 11A

86

13

84

85

# FIG. 11B

INTENSITY 81 14

82

HUMAN    CAR    DISTANCE

# FIG. 11C

86    13

y

x

# FIG. 11D

83

12

85

84

z

x

# FIG. 12

111, 112

LEFT CAMERA
OR
RIGHT CAMERA

13

IMAGE DATA

y

x

120

LiDAR RANGE
FINDER

12

INTENSITY DATA

z

x

HIGH-PRECISION
HIGH-DENSITY
DISTANCE IMAGE

11

EP 3 764 124 A1

# FIG. 13

# FIG. 14

START

OBTAIN $\delta_j^{(L)}$ OF OUTPUT LAYER ~S1

OBTAIN $\delta_j^{(L)}$ OF INTERMEDIATE LAYER l (= L− 1, L− 2, ⋯2) ~S2

OBTAIN DERIVATIVE OF LOSS FUNCTION E BY USING WEIGHT$w_{ji}^{(l, l-1)}$ OF EACH LAYER ~S3

UPDATE $w_{ji}^{(l, l-1)}$ BY DIFFEREN-TIATION OF LOSS FUNCTION E ~S4

END

# FIG. 15

START

LEARNING UNIT ACQUIRES IMAGE DATA FROM LEARNING DATA MEMORY ~S11

LEARNING UNIT ACQUIRES REFLECTED SIGNAL FROM LEARNING DATA MEMORY ~S12

LEARNING UNIT CONVERTS REFLECTED SIGNAL INTO TWO-DIMENSIONAL INTENSITY DATA ~S13

LEARNING UNIT INPUTS IMAGE DATA AND INTENSITY DATA TO NEURAL NETWORK TO OUTPUT DISTANCE IMAGE ~S14

LEARNING UNIT PROPAGATES BACKWARD DIFFERENCE BETWEEN OUTPUT OF NEURAL NETWORK AND ANSWER DISTANCE IMAGE TO NEURAL NETWORK TO GENERATE DISTANCE INFORMATION OUTPUT UNIT ~S15

END

# FIG. 16

START

IMAGE DATA ACQUISITION UNIT ACQUIRES IMAGE DATA FROM CAMERA — S21

REFLECTED SIGNAL ACQUISITION UNIT ACQUIRES REFLECTED SIGNAL FROM LiDAR DEVICE — S22

SIGNAL CONVERSION UNIT CONVERTS REFLECTED SIGNAL INTO TWO-DIMENSIONAL INTENSITY DATA — S23

DISTANCE INFORMATION OUTPUT UNIT ESTIMATES DISTANCE IMAGE FROM IMAGE DATA AND INTENSITY DATA — S23

END

FIG. 17

CONVOLUTION LAYER 1

CONVOLUTION LAYER 2

EP 3 764 124 A1

# FIG. 18A

FILTER 1

FILTER 2

⋮

FILTER c

88

13

88

89

c

CONVOLUTION LAYER 1

# FIG. 18B

88

89

90

13

EP 3 764 124 A1

# FIG. 19

# FIG. 20A

LEFT CAMERA OR RIGHT CAMERA — 111,112

TWO-DIMENSIONAL IMAGE DATA — 14

STEREO IMAGE COMPUTATION UNIT — 250

IMAGE DATA ACQUISITION UNIT — 21

FILTER PROCESSOR — 25

LAYERING UNIT — 26

SIGNAL CONVERSION UNIT — 22

REFLECTED SIGNAL ACQUISITION UNIT — 23

DISTANCE INFORMATION OUTPUT UNIT — 24

HIGH-PRECISION HIGH-DENSITY DISTANCE IMAGE

ONE-DIMENSIONAL REFLECTED SIGNAL WITH RESPECT TO TIME — 15

LiDAR RANGE FINDER — 120

EP 3 764 124 A1

# FIG. 20B

INFORMATION PROCESSING APPARATUS — 30

41 — MEMORY    43
  LEARNING DATA MEMORY

42 — LEARNING UNIT
  SIGNAL CONVERSION UNIT — 21
  FILTER PROCESSOR — 25
  LAYERING UNIT — 26

24 — DISTANCE INFORMATION OUTPUT UNIT

EP 3 764 124 A1

# FIG. 21A

# FIG. 21B

FIG. 22A

111, 112 → LEFT CAMERA OR RIGHT CAMERA

13 → TWO-DIMENSIONAL IMAGE DATA

CONVOLUTION LAYER 92

91

11

120 → LiDAR RANGE FINDER

14 → REFLECTED SIGNAL

12 → INTENSITY DATA

CONVERSION INTO TWO DIMENSIONS

LAYERING

94

FIG. 22B

111, 112 → LEFT CAMERA OR RIGHT CAMERA

13 → TWO-DIMENSIONAL IMAGE DATA

92 → CONVOLUTION LAYER

91

11

120 → LiDAR RANGE FINDER

14 → REFLECTED SIGNAL

12 → INTENSITY DATA

CONVERSION INTO TWO DIMENSIONS

LAYERING

94

EP 3 764 124 A1

# FIG. 23

START

LEARNING UNIT ACQUIRES IMAGE DATA FROM LEARNING DATA MEMORY —S31

LEARNING UNIT ACQUIRES REFLECTED SIGNAL FROM LEARNING DATA MEMORY —S32

LEARNING UNIT CONVERTS REFLECTED SIGNAL INTO TWO-DIMENSIONAL INTENSITY DATA —S33

LEARNING UNIT LAYERS INTENSITY DATA TO GENERATE INTENSITY DATA BLOCK —S34

LEARNING UNIT CONVOLUTES IMAGE DATA TO GENERATE FEATURE IMAGE BLOCK —S35

LEARNING UNIT INPUTS FEATURE IMAGE BLOCK AND INTENSITY DATA BLOCK TO NEURAL NETWORK TO OUTPUT DISTANCE IMAGE —S36

LEARNING UNIT PROPAGATES BACKWARD DIFFERENCE BETWEEN OUTPUT OF NEURAL NETWORK AND ANSWER DISTANCE IMAGE TO NEURAL NETWORK TO GENERATE DISTANCE INFORMATION OUTPUT UNIT —S37

END

# FIG. 24

```
                    ┌─────────┐
                    │  START  │
                    └─────────┘
```

IMAGE DATA ACQUISITION UNIT ACQUIRES IMAGE DATA FROM CAMERA — S41

REFLECTED SIGNAL ACQUISITION UNIT ACQUIRES REFLECTED SIGNAL FROM LiDAR DEVICE — S42

SIGNAL CONVERSION UNIT CONVERTS REFLECTED SIGNAL INTO TWO-DIMENSIONAL INTENSITY DATA — S43

FILTER PROCESSOR CONVOLUTES IMAGE DATA TO GENERATE FEATURE IMAGE BLOCK — S45

LAYERING UNIT LAYERS INTENSITY DATA TO GENERATE INTENSITY DATA BLOCK — S44

DISTANCE INFORMATION OUTPUT UNIT ESTIMATES DISTANCE IMAGE FROM FEATURE IMAGE BLOCK AND INTENSITY DATA BLOCK — S46

```
                    ┌─────────┐
                    │   END   │
                    └─────────┘
```

EP 3 764 124 A1

# FIG. 25

INFORMATION PROCESSING APPARATUS — 30

MEMORY — 41
LEARNING DATA MEMORY — 43

LEARNING UNIT — 42
- SIGNAL CONVERSION UNIT — 22
- FILTER PROCESSOR — 25
- LAYERING UNIT — 26
- SECOND FILTER PROCESSOR — 44
- DISTANCE IMAGE EXTRACTOR — 45
- LOSS CALCULATOR — 46

DISTANCE INFORMATION OUTPUT UNIT — 24

EP 3 764 124 A1

FIG. 26

EP 3 764 124 A1

# FIG. 27

# FIG. 28

EP 3 764 124 A1

# FIG. 29

START

LEARNING UNIT ACQUIRES IMAGE DATA FROM LEARNING DATA MEMORY —S51

LEARNING UNIT ACQUIRES REFLECTED SIGNAL FROM LEARNING DATA MEMORY —S52

LEARNING UNIT CONVERTS REFLECTED SIGNAL INTO TWO-DIMENSIONAL INTENSITY DATA —S53

LEARNING UNIT LAYERS INTENSITY DATA TO GENERATE INTENSITY DATA BLOCK —S54

LEARNING UNIT CONVOLUTES IMAGE DATA TO GENERATE FEATURE IMAGE BLOCK —S55

LEARNING UNIT APPLIES FILTER ON DISTANCE BASIS TO FEATURE IMAGE BLOCK TO GENERATE FEATURE IMAGE ON DISTANCE BASIS —S56

LEARNING UNIT CALCULATES DIFFERENCE (Loss2) BETWEEN FEATURE IMAGE ON DISTANCE BASIS AND ANSWER DISTANCE IMAGE ON DISTANCE BASIS —S57

LEARNING UNIT INPUTS FEATURE IMAGE BLOCK AND INTENSITY DATA BLOCK TO NEURAL NETWORK TO OUTPUT DISTANCE IMAGE —S58

LEARNING UNIT CALCULATES DIFFERENCE (Loss1) BETWEEN OUTPUT OF NEURAL NETWORK AND ANSWER DISTANCE IMAGE —S59

LEARNING UNIT CALCULATES Loss_all from Loss1 AND Loss2 —S60

LEARNING UNIT PROPAGATES Loss_all BACKWARD TO NEURAL NETWORK TO GENERATE DISTANCE INFORMATION OUTPUT UNIT —S61

END

# FIG. 30

START

IMAGE DATA ACQUISITION UNIT ACQUIRES IMAGE DATA FROM CAMERA — S41

REFLECTED SIGNAL ACQUISITION UNIT ACQUIRES REFLECTED SIGNAL FROM LiDAR DEVICE — S42

SIGNAL CONVERSION UNIT CONVERTS REFLECTED SIGNAL INTO TWO-DIMENSIONAL INTENSITY DATA — S43

FILTER PROCESSOR CONVOLUTES IMAGE DATA TO GENERATE FEATURE IMAGE BLOCK — S45

LAYERING UNIT LAYERS INTENSITY DATA TO GENERATE INTENSITY DATA BLOCK — S44

DISTANCE INFORMATION OUTPUT UNIT ESTIMATES DISTANCE IMAGE FROM FEATURE IMAGE BLOCK AND INTENSITY DATA BLOCK — S46

END

# FIG. 31

STEREO CAMERA 110

RIGHT CAMERA 112

LEFT CAMERA 111

TWO-DIMENSIONAL IMAGE DATA 13

TWO-DIMENSIONAL IMAGE DATA 13

LiDAR RANGE FINDER 120

ONE-DIMENSIONAL REFLECTED SIGNAL WITH RESPECT TO TIME 14

TWO-DIMENSIONAL INTENSITY DATA 12

11

HIGH-PRECISION HIGH-DENSITY DISTANCE IMAGE

EP 3 764 124 A1

# FIG. 32

LEFT CAMERA OR RIGHT CAMERA — 111, 112

TWO-DIMENSIONAL IMAGE DATA — 13

11

HIGH-PRECISION HIGH-DENSITY DISTANCE IMAGE

301a
301b
301 — LiDAR RANGE FINDER

ONE-DIMENSIONAL REFLECTED SIGNAL WITH RESPECT TO TIME — 14

TWO-DIMENSIONAL INTENSITY DATA — 12

EP 3 764 124 A1

# FIG. 33

STEREO CAMERA  110

RIGHT CAMERA  112

LEFT CAMERA  111

TWO-DIMENSIONAL IMAGE DATA  13

TWO-DIMENSIONAL IMAGE DATA  13

301a
301b
301

LiDAR RANGE FINDER

ONE-DIMENSIONAL REFLECTED SIGNAL WITH RESPECT TO TIME  14

TWO-DIMENSIONAL INTENSITY DATA  12

11

HIGH-PRECISION HIGH-DENSITY DISTANCE IMAGE

EP 3 764 124 A1

# FIG. 34

111, 112

LEFT CAMERA
OR RIGHT
CAMERA

TWO-DIMENSIONAL
IMAGE DATA — 13

11

HIGH-PRECISION
HIGH-DENSITY
DISTANCE IMAGE

14

ONE-DIMENSIONAL
REFLECTED SIGNAL
WITH RESPECT
TO TIME

302

SONAR

12

TWO-
DIMENSIONAL
INTENSITY
DATA

EP 3 764 124 A1

# FIG. 35

STEREO CAMERA 110

RIGHT CAMERA 112 → TWO-DIMENSIONAL IMAGE DATA 13

LEFT CAMERA 111 → TWO-DIMENSIONAL IMAGE DATA 13

11 →

SONAR 302 → ONE-DIMENSIONAL REFLECTED SIGNAL WITH RESPECT TO TIME 14 → TWO-DIMENSIONAL INTENSITY DATA 12 →

HIGH-PRECISION HIGH-DENSITY DISTANCE IMAGE

# FIG. 36

140

| | | |
|---|---|---|
| 1100 | 1200 | 1000 |
| CAR NAVIGATION SYSTEM | ENGINE ECU | DISPLAY SYSTEM |

NW

| | | |
|---|---|---|
| 1300 | 1400 | 100 |
| BRAKE ECU | STEERING ECU | DISTANCE MEASURING APPARATUS |

**EUROPEAN SEARCH REPORT**

Europäisches Patentamt
European Patent Office
Office européen des brevets

Application Number

EP 20 17 9425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2019/004533 A1 (HUANG YU [US] ET AL)<br>3 January 2019 (2019-01-03)<br>* abstract; figures 11B, 12, 13 *<br>* paragraphs [0035], [0044], [0046], [0048], [0056] *<br>* paragraphs [0060], [0095], [0097], [0100] * | 1,2,5,6, 12-14<br>3,4,7-11 | INV.<br>G01S17/42<br>G01S17/86<br>G01S17/931<br>G06N3/02 |
| X<br><br>A | US 2019/132572 A1 (SHEN YAOMING [US] ET AL) 2 May 2019 (2019-05-02)<br>* abstract; figures 3, 6 *<br>* paragraphs [0032], [0034], [0041], [0044] * | 1,2,5,6, 12-14<br>3,4,7-11 | |
| X<br><br>A | US 2019/197667 A1 (PALURI BALMANOHAR [US]) 27 June 2019 (2019-06-27)<br>* abstract; figure 2 *<br>* paragraphs [0016], [0018], [0019], [0028], [0030], [0034] *<br>* paragraphs [0041], [0056] - [0061], [0064] * | 1,2,5,6, 12-14<br>3,4,7-11 | |
| | | | TECHNICAL FIELDS SEARCHED (IPC) |
| E | WO 2020/181147 A1 (QUALCOMM INC [US])<br>10 September 2020 (2020-09-10)<br>* abstract; figures 9, 10 *<br>* paragraphs [0046], [0060], [0065], [0066], [0070], [0072] *<br>* paragraphs [0074], [0078], [0079], [0082] * | 1-6, 12-14 | G01S<br>G06N |

The present search report has been drawn up for all claims

| Place of search | Date of completion of the search | Examiner |
|---|---|---|
| Munich | 25 September 2020 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 764 124 A1**

## ANNEX TO THE EUROPEAN SEARCH REPORT
## ON EUROPEAN PATENT APPLICATION NO.

EP 20 17 9425

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2020

| Patent document cited in search report | | | Publication date | Patent family member(s) | | | Publication date |
|---|---|---|---|---|---|---|---|
| US 2019004533 | A1 | | 03-01-2019 | CN | 109214986 | A | 15-01-2019 |
| | | | | US | 2019004533 | A1 | 03-01-2019 |
| US 2019132572 | A1 | | 02-05-2019 | CN | 109725634 | A | 07-05-2019 |
| | | | | EP | 3477338 | A1 | 01-05-2019 |
| | | | | JP | 2019109219 | A | 04-07-2019 |
| | | | | KR | 20190047595 | A | 08-05-2019 |
| | | | | US | 2019132572 | A1 | 02-05-2019 |
| US 2019197667 | A1 | | 27-06-2019 | NONE | | | |
| WO 2020181147 | A1 | | 10-09-2020 | US | 2020286247 | A1 | 10-09-2020 |
| | | | | WO | 2020181147 | A1 | 10-09-2020 |

EPO FORM P0459

For more details about this annex : see Official Journal of the European Patent Office, No. 12/82

**EP 3 764 124 A1**

**Patent documents cited in the description**

- JP 2015143679 A